# EUROPEAN PATENT APPLICATION

(11) **EP 4 716 171 A1**
(43) Date of publication of application: **25.03.2026**
(21) Application number: 23937066.1
(22) Date of filing: 18.05.2023
(51) Int. Cl.: H04L 41/16

(54) **INFORMATION CONFIGURATION METHOD AND DEVICE**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN); YOU, Xin, Dongguan, Guangdong 523860 (CN)
(74) Representative: RGTH
(86) International application number: PCT/CN2023/095150
(87) International publication number: WO 2024/234386

(57) **Abstract**

The present application relates to an information configuration method. The method comprises: a first device acquiring model training configuration information, wherein the model training configuration information is used for indicating information related to the training of a first model. In the embodiments of the present application, model training configuration information is designed according to actually required model characteristics, a model is trained according to the model training configuration information, a model training report is generated, and a model identifier is requested for a generated target model, such that the automated management of model training is realized.

## Description

### TECHNICAL FIELD

The present application relates to the field of communications, and more specifically, to an information configuration method and a device.

### BACKGROUND

The model training process usually utilizes a large amount of collected data as input to an algorithm, and the algorithm is continuously optimized to obtain desired output. The algorithm is called a model when its output meets expectations. Given the complex and diverse scenarios of communication systems, introducing artificial intelligence models requires consideration of how to make the models meet requirements of the communication systems.

### SUMMARY

Embodiments of the present application provide an information configuration method and a device that may flexibly configure information required for model training.

Embodiments of the present application provide an information configuration method, including:
obtaining, by a first device, model training configuration information, where the model training configuration information is used to indicate information related to training of the first model.

Embodiments of the present application provide an information configuration method, including:
transmitting, by a second device, model training configuration information, where the model training configuration information is used to indicate information related to training of a first model.

Embodiments of the present application provide a first device, including:
an obtaining unit configured to obtain model training configuration information, where the model training configuration information is used to indicate information related to training of first model.

Embodiments of the present application provide a second device, including:
a first transmitting unit configured to transmit model training configuration information, where the model training configuration information is used to indicate information related to training of a first model.

Embodiments of the present application provide a first device, including a processor and a memory. The memory is configured to store a computer program, and the processor is configured to call and run the computer program stored in the memory, to enable the first device to perform the above information configuration method.

Embodiments of the present application provide a second device, including a processor and a memory. The memory is configured to store a computer program, and the processor is configured to call and run the computer program stored in the memory, to enable the second device to perform the above information configuration method.

Embodiments of the present application provide a chip for implementing the above information configuration method. Specifically, the chip includes a processor configured to call and run a computer program from a memory, to enable a device equipped with the chip to perform the above information configuration method.

Embodiments of the present application provide a computer-readable storage medium for storing a computer program, which, when executed by a device, enables the device to perform the above information configuration method.

Embodiments of the present application provide a computer program product, including computer program instructions, which enable a computer to perform the above information configuration method.

Embodiments of the present application provide a computer program, which, when executed on a computer, enables the computer to perform the above information configuration method.

In the embodiments of the present application, the information required for model training may be flexibly configured through the model training configuration information.

### BRIEF DESCRIPTION OF THE DRAWINGS

FIG. 1 is a schematic diagram of an application scenario according to embodiments of the present application.
FIG. 2 is a schematic flowchart of an information configuration method according to an embodiment of the present application.
FIG. 3 is a schematic flowchart of an information configuration method according to another embodiment of the present application.
FIG. 4 is a schematic flowchart of an information configuration method according to another embodiment of the present application.
FIG. 5 is a schematic flowchart of an information configuration method according to another embodiment of the present application.
FIG. 6 is a schematic block diagram of a first device according to an embodiment of the present application.
FIG. 7 is a schematic block diagram of a first device according to another embodiment of the present application.
FIG. 8 is a schematic block diagram of a second device according to an embodiment of the present application.
FIG. 9 is a schematic block diagram of a second device according to another embodiment of the present application.
FIG. 10 is a schematic block diagram of a communication device according to embodiments of the present application.
FIG. 11 is a schematic block diagram of a chip according to embodiments of the present application.
FIG. 12 is a schematic block diagram of a communication system according to embodiments of the present application.

### DETAILED DESCRIPTION

The technical solutions in the embodiments of the present application will be described below in conjunction with the drawings in the embodiments of the present application.

The technical solutions in the embodiments of the present application may be applied to various communication systems, such as: a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an advanced long term evolution (Advanced long term evolution, LTE-A) system, a new radio (NR) system, an evolution system of an NR system, an LTE-based access to unlicensed spectrum (LTE-U) system, an NR-based access to unlicensed spectrum (NR-U) system, a non-terrestrial communication network (Non-Terrestrial Networks, NTN) system, a universal mobile telecommunication system (Universal Mobile Telecommunication System, UMTS), wireless local area network (Wireless Local Area Networks, WLAN), wireless fidelity (Wireless Fidelity, WiFi), a 5th-Generation (5G) communication system, or other communication system.

Generally speaking, a number of connections supported by a traditional communication system is limited and is easy to implement, however, with the development of the communication technology, the mobile communication system will not only support the traditional communication, but also support, for example, device to device (D2D) communication, machine to machine (M2M) communication, machine type communication (MTC), vehicle to vehicle (V2V) communication, or vehicle to everything (V2X) communication, etc, and the embodiments of the present application may also be applied to these communication systems.

In an implementation, a communication system in embodiments of the present application may be applied to a carrier aggregation (CA) scenario, a dual connectivity (DC) scenario, or a standalone (SA) networking scenario.

In an implementation, the communication system in embodiments of the present application may be applied to an unlicensed spectrum, where the unlicensed spectrum may also be considered as a shared spectrum; or, the communication system in embodiments of the present application may also be applied to a licensed spectrum, where the licensed spectrum may also be considered as an unshared spectrum.

The embodiments of the present application describe various embodiments in conjunction with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user device, or the like.

The terminal device may be a station (ST) in WLAN, which may be a cellular phone, a cordless phone, a session initiation protocol (SIP) phone, a wireless local loop (WLL) station, a personal digital assistant (PDA) device, a handheld device with wireless communication functions, a computing device or other processing devices connected to a wireless modem, an in-vehicle device, a wearable device, a terminal device in a next-generation communication system (such as NR network), a terminal device in a future evolved public land mobile network (PLMN), or the like.

In embodiments of the present application, the terminal device may be deployed on land, including indoor or outdoor, handheld, wearable, or in-vehicle. The terminal device may also be deployed on water (e.g., on a steamship). The terminal device may also be deployed in air (e.g., on an airplane, on a balloon, or on a satellite).

In embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

By way of example and not limitation, in the embodiments of the present application, the terminal device may also be a wearable device. The wearable device may also be referred to as a wearable smart device, which is a general term for wearable devices developed by using wearable technology and intelligent design for everyday wear, such as glasses, gloves, a watch, clothing, or shoes. The wearable device is a portable device that is worn directly on a body, or integrated into a user's clothing or accessories. The wearable device is not only a hardware device, but also implements powerful functions through software support as well as data interaction or cloud interaction. Generalized wearable smart devices include full-featured, large-sized devices that may implement full or partial functionality without relying on smart phones, such as a smart watch or smart glasses, and devices that focus on a certain type of application functionality only and need to be used in conjunction with other devices (such as smart phones), such as various smart bracelets or smart jewelries for monitoring physical signs.

In embodiments of the present application, the network device may be a device for communicating with a mobile device. The network device may be an access point (AP) in WLAN, a base station (Base Transceiver Station, BTS) in GSM or CDMA, a base station (NodeB, NB) in WCDMA, an evolved base station (Evolutional NodeB, eNB or eNodeB) in LTE, a relay station or access point, an in-vehicle device, a wearable device, a network device (gNB) in an NR network, or a network device in a future evolved PLMN network, or a network device in an NTN network, etc.

By way of example and not limitation, in the embodiments of the present application, the network device may have a mobile characteristic. For example, the network device may be mobile equipment. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station set up on land, water, or the like.

In the embodiments of the present application, the network device may provide services for a cell, and the terminal device may communicate with the network device through transmission resources (e.g., frequency domain resources, or rather spectrum resources) used by the cell. The cell may be a cell corresponding to the network device (e.g., a base station). The cell may belong to a macro base station, or a base station corresponding to a small cell. The small cells here may include: a metro cell, a micro cell, a pico cell, a femto cell, etc. These small cells have characteristics of small coverage and low transmission power, and are suitable for providing high-speed data transmission services.

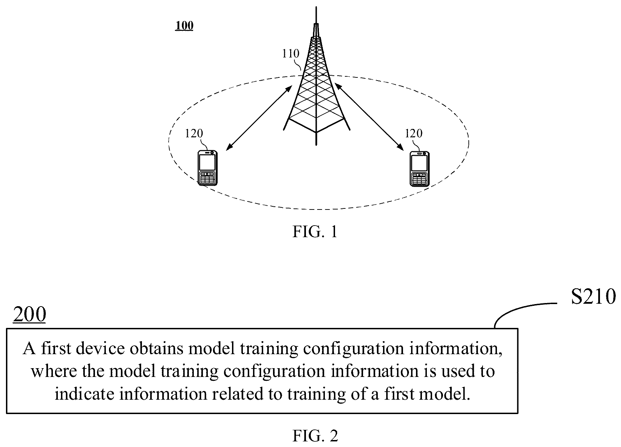

FIG. 1 exemplarily illustrates a communication system 100. The communication system includes a network device 110 and two terminal devices 120. In an implementation, the communication system 100 may include multiple network devices 110, and another number of terminal devices 120 may be in the coverage area of each network device 110, which is not limited in the embodiments of the present application.

In an implementation, the communication system 100 may further include other network entities, such as a mobility management entity (Mobility Management Entity, MME), an access and mobility management function (Access and Mobility Management Function, AMF), which are not limited in the embodiments of the present application.

The network device may include access network devices and core network devices. That is, the wireless communication system further includes multiple core networks for communicating with access network devices. The access network device may be an evolutional node B (which may be abbreviated as eNB or e-NodeB), a macro base station, a micro base station (also called a "small base station"), a pico base station, an access point (AP), a transmission point (TP) or a new generation Node B (gNodeB), etc., in a long-term evolution (LTE) system, a next-generation (mobile communication system) (next radio, NR) system or an authorized auxiliary access long-term evolution (LAA-LTE) system.

It should be understood that a device having a communication function in a network/system in the embodiments of the present application may be referred to as a communication device. In an example of the communication system shown in FIG. 1, the communication devices may include the network device and the terminal devices, which have the communication function. The network device and the terminal devices may be specific devices in the embodiments of the present application and are not detailed further here. The communication devices may also include other devices in the communication system, such as a network controller, a mobile management entity and other network entities, which are not limited in the embodiments of the present application.

It should be understood that terms "system" and "network" are often used interchangeably herein. The term "and/or" herein is used to describe an association relationship between associated objects, for example, to indicate that there may be three relationships between the related objects. For example, "A and/or B" may represent that there are three situations: A alone, both A and B, B alone. In addition, the character "/" herein generally indicates that related objects before and after this character are in an "or" relationship.

It should be understood that the "indicate" mentioned in the embodiments of the present application may mean a direct indication or an indirect indication, or represent that there is an association relationship. For example, A indicating B may mean that A directly indicates B, e.g., that B may be obtained through A; or it may mean that A indirectly indicates B, e.g., that A indicates C, and B may be obtained through C; or it may mean that there is an association relationship between A and B.

The term "correspond" described in the embodiments of the present application may mean a relationship of direct or indirect correspondence between the two, or a relationship of association between the two, or a relationship of indicating and being indicated, or a relationship of configuring and being configured, or the like.

To facilitate understanding of the technical solutions in the embodiments of the present application, related technologies in the embodiments of the present application are described below. The following related technologies, as optional solutions, may be arbitrarily combined with the technical solutions in the embodiments of the present application, and those combined solutions all belong to the protection scope of the embodiments of the present application.

The model training process is generally implemented in industry settings; even for the same optimization goal, different manufacturers most likely use different implementations, and the reference benchmarks for models trained by different manufacturers are also likely to differ. When artificial intelligence (AI) is applied to communication systems, the situation is slightly different. For communication systems, many system indicators (e.g., latency, throughput, and bit error rate) have relatively strict requirements, which require that the trained models also need to meet many common communication system indicators. From another perspective, the existing communication systems are still primarily manually maintained systems, and human engineers are still required to participate from development to later maintenance. The development trend of future communication systems is self-optimizing communication systems, which requires communication systems to further possess self-optimization capabilities. As an advanced optimization tool, AI may be used as a favorable tool to realize self-optimizing communication systems. How to enable the communication system to autonomously generate models that meet the needs may be considered.

FIG. 2 is a schematic flowchart of an information configuration method according to an embodiment of the present application. The method 200 may optionally be applied to the system illustrated in FIG. 1, but the system is not limited thereto. The method includes at least part of the following.

In S210, a first device obtains model training configuration information, where the model training configuration information is used to indicate information related to training of a first model.

In the embodiments of the present application, it is necessary to obtain model training configuration information before formally training a model, so that the model is trained to meet requirements, according to the model training configuration information. Obtaining the model training configuration information may also be determining the model training configuration information. The model may include, but is not limited to, an AI model and/or an ML model. For example, the model may include a model with functions related to the field of communications, such as a CSI prediction model, a beam prediction model, a UE positioning model, or a channel estimation model. The first device may obtain various information related to the training of the first model. This information may be collectively referred to as the model training configuration information of the first model. The first model may include a desired model, which may also be referred to as a planned model. Training configuration information of the desired model may include one or more of parameter-related information associated with the desired model, performance requirement-related information associated with the desired model, and the like.

In an embodiment, the model training configuration information is generated by the first device. In this case, the first device may obtain desired model training configuration information from training configuration information of one or more models generated by itself. Optionally, in a case where the model training configuration information is generated by the first device, the method further includes determining, by the first device, the model training configuration information after negotiating with a second device through a first negotiation process.

In an implementation, the model training configuration information is received by the first device from a second device, and the model training configuration information is generated by the second device. In a case where the model training configuration information is transmitted by the second device to the first device, the model training configuration information may be generated and transmitted to the first device by the second device. That is to say, the first device may obtain desired model training configuration information from training configuration information of one or more models generated by the second device.

In an implementation, the model training configuration information is received by the first device from the second device, the model training configuration information is received by the second device from a third device, and the model training configuration information is generated by the third device; the third device and the second device are different devices. The second device directly receives the model training configuration information from the third device, or the second device receives the model training configuration information from the third device through one or more relay devices. In a case where the model training configuration information is transmitted from the second device to the first device, the model training configuration information may be generated and transmitted by the third device to the first device via the second device, and the third device and the second device are different devices. In this case, the second device and/or the third device may be understood as relay devices, which are used to forward the model training configuration information generated by other devices to the first device.

The above model training configuration information may originate from diverse sources, which may enable model training requirements at any node of the communication system to be fulfilled, allowing artificial intelligence tools to flexibly serve various functional units across the communication network.

In an implementation, the first device is a terminal device or a network device. For example, the first device is a terminal device, and the second device and/or the third device are network devices. For another example, the first device is a network device, and the second device and/or the third device are terminal devices. For another example, the first device, the second device, and the third device are different terminal devices. For another example, the first device, the second device, and the third device are different network devices.

In an implementation, the model training configuration information includes one or more of: a range of input parameter types for the first model, data source constraint information of input parameters for the first model, a range of output parameter types for the first model, an operation capability requirement for the first model, an output precision requirement for the first model, a complexity requirement for the first model, a size requirement for the first model, an algorithmic structure requirement for the first model, an input parameter contribution ratio or contribution ratio level threshold requirement for the first model, and an output parameter prediction accuracy or prediction accuracy level threshold requirement for the first model. In the above configuration information example, the range of input parameter types may include an input parameter type list and/or an input parameter type set, etc. The range of output parameter types may include an output parameter type list and/or an output parameter type set, etc.

The first model herein may also be referred to as a desired model, and model training configuration information corresponding to the desired model may include one or more of: an desired range of model input parameter types, desired data source constraint information of model input parameters, a desired range of model output parameter types, a desired model operation capability requirement, a desired model output precision requirement, a desired model complexity requirement, a desired model size requirement, a desired model algorithmic structure requirement, a desired model input parameter contribution ratio or contribution ratio level threshold requirement (may also be referred to as an effective model input parameter contribution ratio or contribution ratio level threshold requirement), a desired model output parameter prediction accuracy or prediction accuracy level threshold requirement (may also be referred to as an effective model output parameter contribution ratio or contribution ratio level threshold requirement).

In an implementation, the range of input parameter types for the first model includes identification information and/or label information corresponding to at least one suggested model input parameter type.

In an implementation, the range of input parameter types for the first model includes first-type parameters and second-type parameters. The first-type parameters include identification information and/or label information corresponding to at least one determined model input parameter type, and the second-type parameters include identification information and/or label information corresponding to at least one suggested model input parameter type.

In the embodiments of the present application, identification information and/or label information corresponding to a determined model input parameter type may be identification information and/or label information corresponding to a required model input parameter type. Identification information and/or label information corresponding to a suggested model input parameter type may be identification information and/or label information corresponding to an optional model input parameter type. In the embodiments of the present application, identification information and label information corresponding to parameter types may be the same or different. For example, an identification corresponding to a position parameter may include Po, and label information corresponding to the position parameter may include <position>.

Example 1-1: The desired range of model input parameter types: there may be differences between model input parameters suggested for use in the model training process and actually confirmed model input parameters of a trained model. Generally, a parameter set contained in the latter is a subset of a parameter set contained in the former (including a scenario with the same set). The reason is that at the beginning of model training, the model training strategy maker is unable to determine which parameters are more suitable as input parameters of a target model (hereinafter referred to as a second model), and therefore provides a desired range of model input parameter types. In a first implementation, the desired range of model input parameter types includes identification information and/or label information corresponding to at least one suggested model input parameter type. The first implementation may lead to a slower convergence speed of the model training process, but the advantages include not having to predict in advance which parameters are definitely useful for model input, and final model input parameters of the target model are completely confirmed by model training results. In a second implementation, the desired range of model input parameter types includes two types of parameters. The first-type parameters are required parameters, which contain identification information and/or label information corresponding to at least one determined model input parameter type, that is, the first-type parameters must be included as model input parameters in the model training process (or the actually confirmed model input parameters of the trained model must include the first-type parameters). The second-type parameters are optional parameters, which contain identification information and/or label information corresponding to at least one suggested model input parameter type, that is, the second-type parameters are optionally used as model input parameters in the model training process (or whether the actually confirmed model input parameters of the trained model include the second-type parameters depends on confirmation of this by the model training results). Under similar conditions, the second implementation may have a faster convergence speed in the model training process compared to the first implementation.

In an implementation, the data source constraint information of the input parameters for the first model includes one or more of: data source country information associated with the input parameters for the first model, data source geographic area information associated with the input parameters for the first model, data source operator information associated with the input parameters for the first model, data source logical area information associated with the input parameters for the first model, data source scenario information associated with the input parameters for the first model, and data source configuration information associated with the input parameters for the first model.

Example 1-2: The desired data source constraint information of model input parameters: once the desired data source constraint information of model input parameters is configured, all model input parameter data used in the model training process needs to satisfy constraint of the desired data source constraint information of model input parameters. The desired data source constraint information of model input parameters is related to model generalization. The so-called model generalization may be an applicable scope of a model. Generally, a model with better generalization has a wider applicable scope, while a model with poorer generalization has a smaller applicable scope. The model generalization is often directly correlated with the sources of the model input parameters during model training. Generally, if a model is desired to be applicable to multiple scenarios after training, the sources of the model input parameters provided during model training should include multiple scenarios to which the model is desired to be applicable. To make the target model obtained through training satisfy certain model generalization, desired data source constraint information of model input parameters serves as a constraint.

Optionally, the desired data source constraint information of model input parameters includes one or more of: desired data source country information associated with model input parameters, desired data source geographic area information associated with model input parameters, desired data source operator information associated with model input parameters, desired data source logical area information associated with model input parameters, desired data source scenario information associated with model input parameters, and desired data source configuration information associated with model input parameters.

Optionally, the operator information includes one or more of public land mobile network (Public Land Mobile Network, PLMN) identification information, stand-alone non-public networks (Stand-alone Non-public Networks, SNPN) identification information and closed access group (Closed Access Group, CAG) identification information.

Optionally, the logical area information includes one or more of: one or more frequency identification information, one or more physical cell identification (Physical Cell Identification, PCI) information, one or more cell identification information, at least one tracking area identification (Tracking Area Code, TAC) information, and at least one radio access network notification area identification (Radio Access Network Area Code, RANAC) information.

The cell identification information is composed of PCI + frequency point information, or represented by a cell global identity (Cell Global Identity, CGI) information, or represented by a cell index.

Optionally, the scenario information is related to an actual model type. For example, for a model used for positioning, the scenario information may include a line of sight (Line of Sight, LOS) scenario, a none-line of sight (None-Line of Sight, NLOS) scenario, and a mixed scenario (i.e., including both LOS and NLOS scenarios); for a model used for beam prediction, the scenario information may include a FR1 (frequency range 1) scenario, a FR2-1 scenario, a FR2-2 scenario, and a mixed scenario (a scenario without distinguishing FR).

Optionally, the configuration information includes one or more of physical layer configuration, L2 configuration, L3 configuration, non-access stratum (NAS) configuration, and application layer configuration.

In an implementation, the range of output parameter types for the first model includes identification information and/or label information corresponding to at least one suggested model output parameter type.

In an implementation, the range of output parameter types for the first model includes third-type parameters and fourth-type parameters. The third-type parameters include identification information and/or label information corresponding to at least one determined model output parameter type, and the fourth-type parameters include identification information and/or label information corresponding to at least one suggested model output parameter type.

Example 1-3: The desired range of model output parameter types: there may be differences between model output parameters suggested for use in the model training process and actually confirmed model output parameters of a trained model. Generally, a parameter set contained in the latter is a subset of a parameter set contained in the former (including a scenario with the same set). The reason is that at the beginning of model training, the model training strategy maker is unable to determine which parameters are more suitable as output parameters of the target model, and therefore provides a desired range of model output parameter types. In a first implementation, the desired range of model output parameter types includes identification and/or label information corresponding to at least one suggested model output parameter type. The first manner may lead to a slower convergence speed of the model training process, but the advantages include not having to predict in advance which parameters are more suitable as model output, and final model output parameters of the target model are completely confirmed by the model training results. In a second implementation, the desired range of model output parameter types includes two types of parameters. The third-type parameters are required parameters, which include identification information and/or label information corresponding to at least one determined model output parameter type, that is, the third-type parameters must be part of model output parameters during model training (or the actually confirmed model output parameters of the trained model must include the third-type parameters). The fourth-type parameters are optional parameters, which include identification information and/or label information corresponding to at least one suggested model output parameter type, that is, the fourth-type parameters are optionally selected as model output parameters during model training (or whether the actually confirmed model output parameters of the trained model include the fourth-type parameters depends on the confirmation of this by the model training results).

Example 1-4: The desired model operation capability requirement: using a model typically requires meeting certain capabilities, such as computing power and memory capacity; models trained using different implementations will also require to meet different capabilities requirements. In order to ensure that a target model obtained through training meets usage requirements, the desired model operation capability requirement serves as a constraint. Of course, the desired model operation capability requirement may be formulated separately for different capability items, and the embodiments of the present application do not limit this.

Example 1-5: The desired model output precision requirement: models trained using different implementations usually have different corresponding model output precision. In order to ensure that the target model obtained through training meets a model output precision requirement, the desired model output precision requirement serves as a constraint. Of course, the desired model output precision requirement may be formulated separately for different model output items, and the embodiments of the present application do not limit this.

Example 1-6: The desired model complexity requirement: model complexities corresponding to models trained by different implementations may also be different; for example, the model complexity may be represented by a total number of neurons and/or a total number of layers. The total numbers of neurons and/or the total numbers of layers corresponding to the models trained by different implementations may be different. In order to make the target model obtained through training meet the model complexity requirement, the desired model complexity requirement serves as a constraint.

Example 1-7: The desired model size requirement: model sizes corresponding to models trained by different implementations may also be different. For example, for the same model used for CSI compression feedback, some implementations may produce models of only tens of KB, while others may produce models of up to several MB. In order to ensure that the target model obtained through training meets the model size requirement, the desired model size requirement serves as a constraint.

Example 1-8: The desired model algorithmic structure requirement: for models that implement the same function, different implementations may use different model algorithmic structures. For example, some algorithms use a fully connected network algorithmic structure, some algorithms use a convolutional network algorithmic structure, some algorithms use a neural network algorithmic structure, and some algorithms use a hybrid network algorithmic structure. In order to make the target model obtained through training meet the model algorithmic structure requirement, the desired model algorithmic structure requirement serves as a constraint.

In an implementation, input parameter types included in the range of input parameter types for the first model and the input parameter contribution ratio or contribution ratio level threshold requirement for the first model have a one-to-one mapping relationship therebetween, and each input parameter type included in the range of input parameter types for the first model is associated with an input parameter contribution ratio or contribution ratio level threshold for the first model; or
the input parameter types included in the range of input parameter types for the first model and the input parameter contribution ratio or contribution ratio level threshold requirement for the first model have a many-to-one mapping relationship therebetween; all input parameter types included in the range of input parameter types for the first model are associated with an input parameter contribution ratio or contribution ratio level threshold for the first model, or a set of input parameter types included in the range of input parameter types for the first model is associated with an input parameter contribution ratio or contribution ratio level threshold for the first model, and different sets of input parameter types are associated with different input parameter contribution ratios or contribution ratio level thresholds for the first model.

The contribution ratio level is associated with a range of contribution ratios, and each contribution ratio level is associated with a range of contribution ratios.

Example 1-9: Effective model input parameter contribution ratio or contribution ratio level threshold requirement: the desired range of model input parameter types may include many types of input parameters, and not every desired model input parameter is helpful to the model output parameter precision. Even if it helps, different model input parameters may have different contribution ratios to the model output parameter precision. In order to make the target model obtained through training concise and effective, that is, to simplify the model input parameters as much as possible while the model output meets the precision requirement, the effective model input parameter contribution ratio or contribution ratio level threshold requirement may serve as a constraint. For example, the desired model input parameters include four types of parameters: parameters a, b, c, and d, and the model output is an e-type parameter. In the model training process, it is found that parameters a and b are basic parameters for obtaining the model output, therefore, it can be considered that contribution ratios of the parameters a and b to the model output are both 100%. If it is found that under the premise that the model input includes parameters a and b, the addition of parameter c can yield only an additional 5% performance gain, while the addition of parameter d reduces the overall performance by 10%, and assuming that the effective model input parameter contribution ratio threshold is set to 6% or the effective model input parameter contribution ratio level threshold is set to level 1 (where level 1 corresponds to an effective model input parameter contribution ratio greater than or equal to 10%), then the input parameters of the target model obtained after training only include parameters a and b. Although the addition of parameter c can improve the model output parameter precision by 5%, it still does not meet the contribution ratio threshold requirement of 6% or the level 1 threshold requirement. The contribution ratio of parameter d is negative, which obviously does not meet the model input contribution ratio threshold or contribution ratio level threshold requirement.

It is to be noted that input parameter types included in the desired range of model input parameter types and the effective model input parameter contribution ratio or contribution ratio level threshold requirement may have a one-to-one mapping relationship or a many-to-one mapping relationship therebetween. The one-to-one mapping relationship indicates that each input parameter type included in the desired range of model input parameter types is associated with an effective model input parameter contribution ratio or contribution ratio level threshold. The many-to-one mapping relationship indicates that all input parameter types included in the desired range of model input parameter types are associated with an effective model input parameter contribution ratio or contribution ratio level threshold, or a set of input parameter types included in the desired range of model input parameter types is associated with an effective model input parameter contribution ratio or contribution ratio level threshold, and different sets of input parameter types are associated with different effective model input parameter contribution ratios or contribution ratio level thresholds.

In an implementation, output parameter types included in the range of output parameter types for the first model and the output parameter prediction accuracy or prediction accuracy level threshold requirement for the first model have a one-to-one mapping relationship therebetween, and each output parameter type included in the range of output parameter types for the first model is associated with an output parameter prediction accuracy or prediction accuracy level threshold for the first model; or
output parameter types included in the range of output parameter types for the first model and the output parameter prediction accuracy or prediction accuracy level threshold requirement for the first model have a many-to-one mapping relationship therebetween; and all output parameter types included in the range of output parameter types for the first model are associated with an output parameter prediction accuracy or prediction accuracy level threshold for the first model, or a set of output parameter types included in the range of output parameter types for the first model is associated with an output parameter prediction accuracy or prediction accuracy level threshold for the first model, and different sets of output parameter types are associated with different effective model output parameter prediction accuracy or prediction accuracy level thresholds.

The prediction accuracy level is associated with a range of prediction accuracies, and each prediction accuracy level is associated with a range of prediction accuracies.

Example 1-10: Effective model output parameter prediction accuracy or accuracy level threshold requirement: the desired range of model output parameter types may include many types of output parameters, and not every desired model output parameter can be accurately predicted or inferred. Even if these desired model output parameters are predictable, the prediction accuracies or accuracy levels of a model for different output parameters may be different. In order to make model output parameters associated with a target model obtained through training concise and make the prediction results have a high accuracy or accuracy level, the effective model output parameter prediction accuracy or accuracy level threshold requirement may serve as a constraint. For example, the desired model output parameters include four types of parameters: parameters m, n, p, and q, and input parameters of the model are w1 and w2. In the model training process, it was found that when all the model inputs were parameters w1 and w2, the prediction accuracies of the four output parameters m, n, p, and q were 90%, 85%, 30%, and 10%, respectively. In this case, assuming that the effective model output parameter prediction accuracy threshold is set to 80% or the effective model output parameter prediction accuracy level threshold is set to level 2 (where level 2 corresponds to the effective model output parameter prediction accuracy greater than or equal to 80%), the predictions of the model for output parameters m and n meet the prediction accuracy or prediction accuracy level threshold requirement, but the predictions for output parameters p and q do not meet the prediction accuracy or prediction accuracy level threshold requirement.

It is to be noted that output parameter types included in the desired range of model output parameter types and the effective model output parameter prediction accuracy or accuracy level threshold requirement have a one-to-one mapping relationship or a many-to-one mapping relationship therebetween. The one-to-one mapping relationship indicates that each output parameter type included in the desired range of model output parameter types is associated with an effective model output parameter prediction accuracy or accuracy level threshold. The many-to-one mapping relationship indicates that all output parameter types included in the desired range of model output parameter types are associated with an effective model output parameter prediction accuracy or accuracy level threshold, or a set of output parameter types included in the desired range of model output parameter types is associated with an effective model output parameter prediction accuracy or accuracy level threshold, and different sets of output parameter types are associated with different effective model output parameter prediction accuracies or accuracy level thresholds.

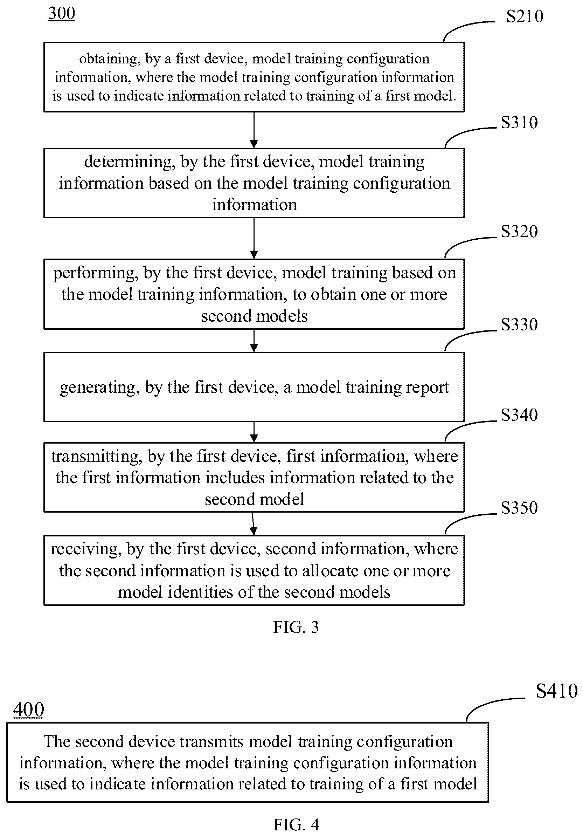

FIG. 3 is a schematic flowchart of an information configuration method according to another embodiment of the present application. The method 300 may include one or more features of the information configuration method in the above embodiments. In an implementation, as illustrated in FIG. 3, the method further includes:
S310, determining, by the first device, model training information based on the model training configuration information; and
S320, performing, by the first device, model training based on the model training information to obtain one or more second models.

In another implementation, S310 and S320 may be combined into one step, which is not limited in the present application.

In an implementation, the second model is an instance of the first model. That is, the first model is a desired model before model training, and the second model is a target model obtained after actual training according to the model training configuration information associated with the desired model.

In the embodiments of the present application, the first device may actually perform training based on the model training configuration information obtained in the above steps to obtain the second model, and the second model may also be referred to as a target model. The target model is a model actually obtained after model training. The target model may be understood as an instance of the desired model, and the parameters, performance requirements, etc., of the target model may be a subset of the desired model. For example, the first model (the desired model) is a positioning model, and input parameters involved in the corresponding model training configuration information include P1, P2 and P3, output parameters include position information, the desired model size requirement is less than or equal to 500 MB, and the desired model precision is that a positioning error is less than or equal to 10 meters. Based on parameters P1, P2 and P3, a positioning model with a size of 300 MB and a positioning precision less than or equal to 5 meters is obtained; based on the parameters P1 and P3, a positioning model with a size of 200 MB and a positioning precision less than or equal to 8 meters is obtained. The two positioning models obtained in this example may be understood as two instances of the first model, i.e., two second models (target models).

By setting different model training configuration information, different target models may be obtained through flexibly training.

In an implementation, as illustrated in FIG. 3, the method further includes: S330, generating, by the first device, model training report(s). A model training report may include information related to a second model after training, such as the target model.

In an implementation, the model training report includes one or more of: model description information associated with the second model; a range of parameter types, in the range of input parameter types for the first model, that are not selected as model input parameters associated with the second model; a contribution ratio or contribution ratio level information corresponding to each parameter type included in the range of parameter types, in the range of input parameter types for the first model, that are not selected as the model input parameters associated with the second model; a contribution ratio or contribution ratio level information corresponding to each parameter type included in the range of input parameter types for the first model; a range of parameter types, in the range of output parameter types for the first model, that are not selected as model output parameters associated with the second model; a prediction accuracy or prediction accuracy level information corresponding to each parameter type included in the range of parameter types, in the range of output parameter types for the first model, that are not selected as the model output parameters associated with the second model; and a prediction accuracy or prediction accuracy information corresponding to each parameter type included in the range of output parameter types for the first model.

For example, the training report information of the target model may include one or more of: model description information associated with the target model; a range of parameter types, in the desired range of model input parameter types, that are not selected as model input parameters associated with the target model; a contribution ratio or contribution ratio level information corresponding to each parameter type included in the range of parameter types, in the desired range of model input parameter types, that are not selected as the model input parameters associated with the target model; a contribution ratio or contribution ratio level information corresponding to each parameter type included in the desired range of model input parameter types; a range of parameter types, in the desired range of model output parameter types, that are not selected as model output parameters associated with the target model; prediction accuracy or prediction accuracy level information corresponding to each parameter type included in the range of parameter types, in the desired range of model output parameter types, that are not selected as the model output parameters associated with the target model; and prediction accuracy or prediction accuracy level information corresponding to each parameter type included in the desired range of model output parameter types.

In an implementation, the model description information associated with the second model includes one or more of: a functional characteristic associated with the second model, a range of input parameter types associated with the second model, input parameter specification requirement information associated with the second model, an input parameter preprocessing rule associated with the second model, a range of output parameter types associated with the second model, output parameter specification requirement information associated with the second model, an output parameter preprocessing rule associated with the second model, application scenario information associated with the second model, deployment location information of the second model, capability requirement information for using the second model, performance monitoring indicator information of the second model, attribution information of the second model, effective usage scope information of the second model, generalization characteristic information of the second model, version information of the second model, precision level information of the second model, data compilation format information of the second model, data storage format information of the second model, computational complexity information of the second model, model complexity information of the second model, and model size information of the second model.

In the embodiments of the present application, model description information associated with a model may include information of types that are not completely the same as those included in the model training configuration information. For example, the model description information associated with the model includes part or all of the information in the model training configuration information, and further includes new information that is not included in the model description information associated with the model, such as attribution, generalization characteristic, compilation format, storage format, computational complexity, and the like.

Example 2-1, model description information associated with the target model: the model description information includes one or more of: a functional characteristic associated with the target model, a range of input parameter types associated with the target model, input parameter specification requirement information associated with the target model, an input parameter preprocessing rule associated with the target model, a range of output parameter types associated with the target model, output parameter specification requirement information associated with the target model, an output parameter preprocessing rule associated with the target model, application scenario information associated with the target model, deployment location information of the target model, capability requirement information for using the target model, performance monitoring indicator information of the target model, attribution information of the target model, effective usage scope information of the target model (e.g., applicable configuration information associated with the target model), generalization characteristic information of the target model, version information of the target model, precision level information of the target model, data compilation format information of the target model, data storage format information of the target model, computational complexity information of the target model, model complexity information of the target model, and model size information of the target model.

The specific examples of the model description information are as follows.

### Information 1: functional characteristic associated with a model

The functional characteristic associated with the model is used to indicate a function associated with the corresponding model. For example, model 1 is used for a channel state information (CSI) compression feedback function, model 2 is used for a mobility enhancement function, model 3 is used for a beam prediction function, model 4 is used for a positioning function, and so on.

### Information 2: a range of input parameter types associated with a model

The range of input parameter types associated with the model is used to indicate input parameter types required by the corresponding model. For example, model 3 is used for the beam prediction function, and the input parameter types required by the model include index information of actually measured beams, signal measurement result information of each actually measured beam and so on.

### Information 3: input parameter specification requirement information associated with a model

The input parameter specification requirement information associated with the model is used to indicate specifications of input parameters required by the corresponding model. For example, model 3 is used for beam prediction function, and it is assumed that a network device can schedule resources in eight beam directions, but only transmits measurement reference signals in four of them, then the terminal device can only obtain measurement results for four beams in each measurement process. Scenario 1: the beam prediction model only predicts signal measurement results of beams not currently measured. If only measurement results of four beams need to be input into the beam prediction model used in scenario 1, then measurement results of four beams obtained by the terminal device in each measurement may be used as the input of the beam prediction model for scenario 1 (measurement results of eight beams associated with this measurement may be obtained as the output, that is, four true values and four predicted values; or predicted measurement results of four beams are output). Scenario 2: the beam prediction model is used to predict measurement results of the eight beams over a period of time in the future, and in this scenario, the beam prediction model may take a set of measurement results of four beams obtained in past N measurement processes as input, and outputs a set of measurement results of the eight beams over the period of time in the future. For example, the beam prediction model takes a collection of three sets of measurement results of four beams obtained at times (T-3), (T-2), and (T-1) as input, and outputs a collection of two sets of measurement results of the eight beams at times T and (T+1).

In summary, although measurement results of the same four beams are used for beam prediction (the model input parameter types are the same), different application scenarios require different input data specifications. Therefore, the input parameter specification requirement information associated with an AI/ML model is also one of the key pieces of information for describing a model.

### Information 4: an input parameter preprocessing rule associated with a model

The input parameter preprocessing rule associated with the model is used to indicate how to reprocess an input data set of the corresponding model, and operations involved in the reprocessing process may include at least one of data dimensionality reduction, data dimensionality increase, redundancy elimination, and redistribution.

Data dimensionality reduction: If a dimension of the data is higher than a dimension required by the input of the model, the data needs to be reduced in dimension through the preprocessing rule before being input into the model.

Data dimensionality increase: If the dimension of the data is lower than the dimension required by the input of the model, the data needs to be increased in dimension through the preprocessing rule before being input into the model.

Redundancy elimination: If distribution or information volume of multiple sets of data is almost the same, redundancy of the data needs to be eliminated through the preprocessing rule before the data is input into the model, because redundant data often does not bring more performance improvements but instead increases non-effective operations.

Redistribution: In some cases, it is difficult to obtain good model generalization of a model by performing model training using data with similar characteristic information, but redistributing data with different characteristic information is conducive to obtaining a model with better generalization.

For example, for scenario 1 in Information 3, the terminal device may measure four of the eight beams in cell A, whereas it may measure five of the eight beams in cell B, and three of the eight beams in cell C. If it is desired to use the same beam prediction model (only four beam measurement results are needed as input) for beam prediction in cells A, B, and C, the measurement results of cell A may be used directly, but the measurement results obtained in cell B need data dimensionality reduction, that is, four measurement results are selected from the five available beam measurement results as the input parameters required by the model. While the measurement results obtained in cell C need data dimensionality increase, that is, the three available beam measurement results are converted into four to obtain the input parameters required by the model.

In another implementation, at least two of Information 2, Information 3, and Information 4 may be combined, which is not limited in the present application.

### Information 5: a range of output parameter types associated with a model

The range of output parameter types associated with the model is used to indicate output parameter types required by the corresponding model. For example, model 3 is used for beam prediction, and the corresponding output parameter types include index information of actually unmeasured beams, predicted signal measurement result information of each actually unmeasured beam, etc.

### Information 6: output parameter specification requirement information associated with a model

The output parameter specification requirement information associated with the model is used to indicate specifications of output parameters required by the corresponding model. For example, model 3 is used for beam prediction, and output parameters may be beam prediction results at one moment in the future, or the output parameters may be a set of beam prediction results at multiple moments in the future. For example, the model takes a collection of three sets of measurement results of four beams obtained at times (T-3), (T-2), and (T-1) as input, and may output measurement results of eight beams at time T, or a collection of two sets of measurement results of eight beams at time T and time (T+1).

In summary, although the beam measurement results in the future are predicted (the output data types of the model are the same), the output data specifications required by model 3 in different application scenarios are different. Therefore, output parameter specification requirement information associated with a model is also one of the key pieces of information for describing the model.

### Information 7: an output parameter preprocessing rule associated with a model

The output parameter preprocessing rule associated with the model is used to indicate how to reprocess a set of output data of the corresponding model, and operations involved in the reprocessing process may include at least one of data dimensionality reduction, data dimensionality increase, redundancy elimination, and redistribution. For specific processing methods, reference is made to the relevant description in Information 4.

In another implementation, at least two of Information 5, Information 6, and Information 7 may be combined, which is not limited in this application.

### Information 8: application scenario information associated with a model

The application scenario information associated with the model refers to different usage scenarios under the same functional characteristic. For example, for the model used for positioning, the application scenarios may be further subdivided into a direct path (Line of Sight, LoS) scenario, a non-direct path (Non-Line of Sight, NLoS) scenario or a mixed scenario (including both LoS and NLoS). For another example, for the mobility control model, the application scenarios may be further subdivided into a ground communication scenario and a non-ground communication scenario (including satellite communication, drone communication, hot air balloon communication and other sub-scenarios). Each scenario may be further divided into high-speed mobile scenarios, medium-speed mobile scenarios, low-speed mobile scenarios and other sub-scenarios, or may be further divided into high-frequency mobility scenarios, low-frequency mobility scenarios and other sub-scenarios. It is also possible to consider a combination of two scenarios, e.g., a ground communication high-frequency mobility scenario.

Optionally, Information 8 may adopt a value, the meaning of which indicates that the application scenario of the model is all-encompassing (that is, the model is applicable to any scenario corresponding to its associated functional characteristic). For example, for the model used for positioning, and assuming that Information 8 contains two bits, a value '00' may be used to represent any scenario, '01' may be used to represent the LoS scenario, '10' may be used to represent the NLoS scenario, and '11' may be used to represent the mixed scenario.

### Information 9: deployment location information of a model

The deployment location information of the model includes any of the following meanings: deployed on a core network device, deployed on an application server, deployed in an OAM, deployed on an access network device, deployed on a terminal device, or having no deployment location constraints.

### Information 10: capability requirement information for using a model

The capability requirement information for using the model is used to indicate several capability requirements needed to use the model. For example, the capability requirement information for using the model includes one or more of: the minimum requirement of floating-point operation capability required when using the model, the minimum requirement of running memory required when using the model, a pre-compilation memory footprint level of model algorithm data, a post-compilation memory footprint level of model algorithm data, the minimum input data rate (or bit rate) required when using the model, the maximum input data rate (or bit rate) required when using the model, the minimum output data rate (or bit rate) required when using the model, and the maximum output data rate (or bit rate) required when using the model.

### Information 11: performance monitoring indicator information of a model

The performance monitoring indicator information of the model is used to indicate several indicators for monitoring the model. For example, the performance monitoring indicator information of the model includes one or more of: average power consumption of a single inference process, an average floating-point operation calculation amount of a single inference process, an average delay of a single inference process, system throughput, system bit error rate, and average transmission delay of data packets.

### Information 12: attribution information of a model

The attribution information of the model is used to indicate information related to the provider of the data of the model, specifically including: information about country or region to which the data of the model belongs and/or information about service provider to which the data of the model belongs.

The service provider may be any of: OTT (Over The Top, providing application services to users through the Internet) manufacturer information, network operator information (e.g., represented by a PLMN identification), and public website information.

### Information 13: effective usage scope information of a model (e.g., an applicable scenario, configuration, site information, etc.)

The effective usage scope information of the model is used to indicate conditions under which the model is effectively used. For example, the effective usage scope information of the model includes one or more of: geographic area information allowing effective use, country information allowing effective use, PLMN information allowing effective use, tracking area code (TAC) information allowing effective use, RANAC (RAN Area Code) information allowing effective use, cell information allowing effective use, and configuration information allowing effective use.

### Information 14: generalization characteristic information of a model.

The generalization characteristic reflects an extent to which a model may be applied to various scenarios. Generally speaking, the higher the generalization characteristic of a model, the more application scenarios the model is applicable to. The generalization characteristic information of the model may include information about at least one application scenario of the model (referring to definition of Information 8), which is used to indicate that the model may be used in the above corresponding associated application scenarios.

### Information 15: version information of a model

As different parameters in the same application scenario change over time, the algorithm data of the model with the corresponding function may need to be fine-tuned or updated. The updated model and the pre-update model have the same associated application scenario and the same function, and only the model algorithm data details are slightly different. Therefore, model algorithm version numbers may be used to distinguish them, making it easier to control and manage similar model algorithms.

### Information 16: precision level information of a model

Even for models having the same function and in the same application scenario, the complexity of the models' algorithm design is different, and corresponding inference precision of the models will also be different. In order to distinguish the differences in inference precision among similar models, the precision level information of the model algorithm may be used to describe the inference precision of the corresponding model.

### Information 17: data compilation format information of a model

The model algorithm is essentially a program written in a computer language, and the types of program files created for different language platforms are different. Some languages are compatible with each other whereas others are not. Therefore, the data compilation format information of the model algorithm is also important information for describing a model, and users of the model may determine the compilation environment required to use the model through the information. Otherwise, incorrect usage of an incompatible language compilation environment will prevent the use of the corresponding model algorithm.

### Information 18: data storage format information of a model

This information is used to indicate a data storage format of the model, e.g., a ZIP compression format.

### Information 19: computational complexity information of a model

This information is used to indicate a basic computational capability required for the model, e.g., floating-point operations per second.

### Information 20: complexity information of a model

This information is used to indicate the complexity of the model, for example, how many layers of neurons the model consists of.

### Information 21: size information of a model

This information is used to refer to a memory footprint of the model data before or after compilation.

Example 2-2, the range of parameter types, in the desired range of model input parameter types, that are not selected as the model input parameters associated with the target model: for example, the desired model input parameters include four types of parameters: parameters a, b, c, and d, whereas model input parameters associated with the target model obtained through training only include parameter a and parameter b; thus parameters c and d fall within the range of parameter types that are not selected as the model input parameters associated with the target model.

Example 2-3, the contribution ratio or contribution ratio level information corresponding to each parameter type included in the range of parameter types, in the desired range of model input parameter types, that are not selected as the model input parameters associated with the target model: for example, the desired model input parameters include four types of parameters, a, b, c, and d, whereas the model input parameters associated with the target model obtained through training only include parameters a and b; thus parameters c and d fall within the range of parameter types that are not selected as the model input parameter associated with the target model. Here, adding parameter c as model input can yield only an extra 5% performance gain, whereas adding parameter d as the model input reduces overall model performance by 10%. In this case, the contribution ratio corresponding to parameter c is considered to be a positive value or 5%, and the contribution ratio corresponding to parameter d is considered to be a negative value or -10%.

Example 2-4, the contribution ratio or contribution ratio level information corresponding to each parameter type included in the desired range of model input parameter types: the desired model input parameters include four types of parameters, a, b, c, and d. The model input parameters associated with the target model obtained through training, however, only include parameters a and b, which are essential for target model prediction or inference. Therefore, the contribution ratios corresponding to both parameters a and b are 100%. In this case, adding parameter c as an additional model input can yield only an extra 5% performance gain, whereas adding parameter d as an additional model input reduces the overall model performance by 10%. In this case, the contribution ratio corresponding to parameter c is considered to be a positive value or 5%, and the contribution ratio corresponding to parameter d is considered to be a negative value or -10%.

Example 2-5, the range of parameter types, in the desired range of model output parameter types, that are not selected as the model output parameters associated with the target model: for example, the desired model output parameters include four types of parameters: m, n, p, and q, whereas the model output parameters associated with the target model obtained through training only include parameters m and n; thus parameters p and q fall within the range of parameter types that are not selected as the model output parameters associated with the target model.

Example 2-6, the prediction accuracy or prediction accuracy level information corresponding to each parameter type included in the range of parameter types, in the desired range of model output parameter types, that are not selected as the model output parameters associated with the target model: for example, the desired model output parameters include four types of parameters: m, n, p, and q, whereas the model output parameters associated with the target model obtained through training only include parameters m and n; thus parameters p and q fall within the range of parameter types that are not selected as the model output parameters associated with the target model. Here, using parameter p as the model output can yield only 30% prediction accuracy, while using parameter q as the model output can yield only 10% prediction accuracy. In this case, it is considered that the prediction accuracy corresponding to parameter p is 30%, while the prediction accuracy corresponding to parameter q is 10%.

Example 2-7, the prediction accuracy or prediction accuracy level information corresponding to each parameter type included in the desired range of model output parameter types: for example, the desired model output parameters include four types of parameters: m, n, p, and q, whereas the model output parameters associated with the target model obtained through training only include parameters m and n, with prediction accuracies of 90% and 85% respectively. Therefore, it is considered that the prediction accuracy corresponding to parameter m is 90%, while the prediction accuracy corresponding to parameter n is 85%. In this case, using parameter p as the model output can yield only 30% prediction accuracy, while using parameter q as the model output can yield only 10% prediction accuracy. Therefore, it is considered that the prediction accuracy corresponding to parameter p is 30%, while the prediction accuracy corresponding to parameter q is 10%.

In an implementation, the model training report and the second model have an association relationship; or the model description information and the second model have an association relationship. In the embodiments of the present application, the first device may associate the model training report information with the target model, and/or may associate the model description information with the target model. The generated model training report is helpful for backtracking through the model training process and adjusting the model training strategy, and for example, iterative model training is performed to obtain a target model with better performance.

In an implementation, as illustrated in FIG. 3, the method further includes:
S340: transmitting, by the first device, first information, where the first information includes information related to the second model.

In an implementation, the first information includes one or more of:
the model training report;
an index number associated with the model training report;
an index number associated with the second model
the model description information;
an index number associated with the model description information; and
the second model.

In an implementation, the first information is used to request model identifications of the one or more second models and/or to exchange information related to the second model.

In an implementation, as illustrated in FIG. 3, the method further includes:
S350, receiving, by the first device, second information, where the second information is used to allocate model identifications of the one or more second models.

In an implementation, the second information includes one or more of:
model identification information allocated to the second model;
the index number associated with the model training report;
the index number associated with the second model; and
the index number associated with the model description information.

In an implementation, the first device stores one or more of: the model training report associated with the second model, the second model, the model identification of the second model, and the model description information associated with the second model.

As the provider of model training services, the first device, after training one or more second models, may transmit information related to the second models via the first information to the model training task initiator or model demander, e.g., a second device, a third device, or a fourth device, thereby completing the model training task feedback. If it is considered that the entire model training is completed only when the first device obtains the allocated model identifications, and/or if the model training task feedback further includes multiple rounds of information interaction with the model demander, then the first information introduces the index numbers associated with the information related to the second models to simplify identifying the multiple different second models. For example, if the receiver of the first information needs to give a further indication to the transmitter of the first information (such as allocating model identifications to one or more second models or inquiring about model training details via the second information), the index identifications may be used instead of the information related to the second models themselves, thereby achieving accurate management of the relevant second models using low-overhead index identifications. Optionally, after the model is trained, the process may further include completing a model testing task, and the testing party may be the first device or devices other than the first device. For example, after transmitting the first information, the first device receives a test message transmitted by the second device, the third device, or the fourth device. The test message includes some test parameters or test cases. The first device tests the second model based on information in the test message, and feeds back the test result to the test task initiator. Based on the feedback test results and/or local policy information, the test task initiator determines whether to retrain the model (e.g., resend the model training configuration information) or confirms that the trained model is effective, and then allocates a model identification to the validated model, for example, via the second information.

The receiver of the first information may be the second device or the fourth device. The fourth device may be the same as or different from the aforementioned third device.

In an implementation, the method further includes: transmitting, by the first device, capability information, where the capability information includes one or more of the following capability information:
whether the first device supports a model training function;
a range of parameter types available for the first device; and
a maximum number of models trainable concurrently on the first device.

In the embodiments of the present application, transmitting the capability information by the first device may be a prerequisite step. For example, the first device first exchanges the capability information with the second device, and then performs S210.

Optionally, any information involved in the embodiments of the present application is carried by any one of the following message types:
an NR positioning protocol A (NR Positioning Protocol A, NRPPa) message, a long term evolution positioning protocol (Long Term Evolution Positioning Protocol, LPP) message, a non-access stratum (Non-Access Stratum NAS) message, a radio resource control (Radio Resource Control, RRC) message, a media access control control element (Media Access Control Control Element, MAC CE) message, a downlink control information (Downlink Control Information, DCI) message, an uplink control information (Uplink Control Information, UCI) message, a physical uplink control channel (Physical Uplink Control Channel, PUCCH) message, a physical uplink shared channel (Physical Uplink Shared Channel, PUSCH) message, an Inter-node message, an Xn interface message, an F1 interface message, an E1 interface message, an NG interface message, a core network service-based architecture message or an AI-dedicated message.

Optionally, any information involved in the embodiments of the present application is carried by any one of the following message types: a unicast message, a multicast message, or a broadcast message.

The unicast message (one-to-one): The source transmits unicast messages through a unicast channel. Only terminal devices or network devices allocated corresponding unicast resources may receive the unicast messages. The unicast message may also be termed dedicated signaling.

The multicast message (one-to-many): The source transmits multicast messages through a multicast channel. Terminal devices or network devices that are group members within multicast signal coverage may receive the multicast messages. When joining a group, terminal devices or network devices obtain multicast channel-related resources.

The broadcast message (one-to-any): The source transmits broadcast messages through a broadcast channel, and any terminal device or network device within broadcast signal coverage may receive the broadcast messages.

In the embodiments of the present application, the first device, the second device, the third device and the fourth device may be terminal devices or network devices. The network device may be an access network device or a core network device or an AI/ML model-related information management device or an operation administration and maintenance (OAM) device.

For example, the access network device may be any one of: a next generation Node B (gNB) (or new generation access network node), a centralized unit (CU), a distributed unit (DU), a centralized unit-control plane (CU-CP), or a centralized unit-user plane (CU-UP).

For example, the core network device may be any one of: a location management function (Location Management Function, LMF) network element, Network Slice Selection Function (NSSF), Authentication Server Function (AUSF), Unified Data Management (UDM), Access and Mobility Management Function (AMF), Session Management Function (SMF), Policy Control Function (PCF), User Plane Function (UPF), Sensing Function (SF), or a network data analytics function (Network Data Analytics Function, NWDAF) network element.

In the embodiments of the present application, the information configuration method proposed in the embodiments of the present application is applicable to a control method for model training, through which automated management of model training may be achieved. The specific method is as follows: designing the model training configuration information according to actual required model characteristics, where the model training configuration information constrains multiple aspects of the model. The first device trains the model according to the model training configuration information and generates the model training report. The model training report reflects various characteristics of the model training. While generating the target model and obtaining the model description information, it analyzes the characteristics of each model input and/or model output. The generated model training report may be used as reference information for targeted optimization operations in subsequent model training, so as to obtain the desired model during the iterative model training process.

The information configuration method proposed in the embodiments does not need to accurately give the input and/or output parameter types actually required by the model before model training. Before model training, only the range of model input and/or output parameter types need to be given, and the input and/or output parameter types actually required by the model are selected from the given range of model input and/or output parameter types through the model training process. This model training method is flexible and avoids the system design error problem caused by artificially setting the model input and/or model output. Because the model input and/or model output artificially set is mostly based on the experience of human engineers, when there are many parameters that affect model training, human engineers' experience will often be biased. Therefore, by allowing the model input and/or model output parameter selection be handled by the model training process, the problem of experience bias from human engineers may be avoided to a large extent.

Further, by adopting the method in the embodiments of the present application, the types of models that may be trained are very flexible. A variety of models that satisfying the requirements may be obtained by changing the content of the model training configuration information. The trainable model is suitable to serve as a general-purpose implementation architecture for model training to be deployed in communication systems.

Further, by adopting the method in the embodiments of the present application, the model training process is basically automated and does not require too much human design intervention, which is conducive to realizing the vision of an Al-controlled self-optimizing network.

FIG. 4 is a schematic flowchart of an information configuration method according to an embodiment of the present application. The method 400 may optionally be applied to the system illustrated in FIG. 1, but the system is not limited thereto. The method includes at least part of the following.

In S410, the second device transmits model training configuration information, where the model training configuration information is used to indicate information related to training of a first model.

In an implementation, the model training configuration information includes one or more of: a range of input parameter types for the first model, data source constraint information of input parameters for the first model, a range of output parameter types for the first model, an operation capability requirement for the first model, an output precision requirement for the first model, a complexity requirement for the first model, a size requirement for the first model, an algorithmic structure requirement for the first model, an input parameter contribution ratio or contribution ratio level threshold requirement for the first model, and an output parameter prediction accuracy or prediction accuracy level threshold requirement for the first model.

In an implementation, the range of input parameter types for the first model includes identification information and/or label information corresponding to at least one suggested model input parameter type.

In an implementation, the range of input parameter types for the first model includes first-type parameters and second-type parameters; the first-type parameters include identification information and/or label information corresponding to at least one determined model input parameter type, and the second-type parameters include identification information and/or label information corresponding to at least one suggested model input parameter type.

In an implementation, the data source constraint information of the input parameters for the first model includes one or more of: data source country information of the input parameters for the first model, data source geographic area information associated with the input parameters for the first model, data source operator information associated with the input parameters for the first model, data source logic area information associated with the input parameters for the first model, data source scenario information associated with the input parameters for the first model, and data source configuration information associated with the input parameters for the first model.

In an implementation, the range of output parameter types for the first model includes identification information and/or label information corresponding to at least one suggested model output parameter type.

In an implementation, the range of output parameter types for the first model includes third-type parameters and fourth-type parameters; the third-type parameters include identification information and/or label information corresponding to at least one determined model output parameter type, and the fourth-type parameters include identification information and/or label information corresponding to at least one suggested model output parameter type.

In an implementation, input parameter types included in the range of input parameter types for the first model and the input parameter contribution ratio or contribution ratio level threshold requirement for the first model have a one-to-one mapping relationship therebetween, and each input parameter type included in the range of input parameter types for the first model is associated with an input parameter contribution ratio or contribution ratio level threshold for the first model; or
the input parameter types included in the range of input parameter types for the first model and the input parameter contribution ratio or contribution ratio level threshold requirement for the first model have a many-to-one mapping relationship therebetween; and all input parameter types included in the range of input parameter types for the first model are associated with an input parameter contribution ratio or contribution ratio level threshold for the first model, or a set of input parameter types included in the range of input parameter types for the first model is associated with an input parameter contribution ratio or contribution ratio level threshold for the first model, and different sets of input parameter types are associated with different input parameter contribution ratios or contribution ratio level thresholds for the first model.

The contribution ratio level is associated with a range of contribution ratios, and each contribution ratio level is associated with a range of contribution ratios.

In an implementation, output parameter types included in the range of output parameter types for the first model and the output parameter prediction accuracy or prediction accuracy level threshold requirement for the first model have a one-to-one mapping relationship therebetween, and each output parameter type included in the range of output parameter types for the first model is associated with an output parameter prediction accuracy or prediction accuracy level threshold for the first model; or
the output parameter types included in the range of output parameter types for the first model and the output parameter prediction accuracy or prediction accuracy level threshold requirement for the first model have a many-to-one mapping relationship therebetween; and all output parameter types included in the range of output parameter types for the first model are associated with an output parameter prediction accuracy or prediction accuracy level threshold for the first model, or a set of output parameter types included in the range of output parameter types for the first model is associated with an output parameter prediction accuracy or prediction accuracy level threshold for the first model, and different sets of output parameter types are associated with different effective model output parameter prediction accuracies or prediction accuracy level thresholds.

The prediction accuracy level is associated with a range of prediction accuracies, and each prediction accuracy level is associated with a range of prediction accuracies.

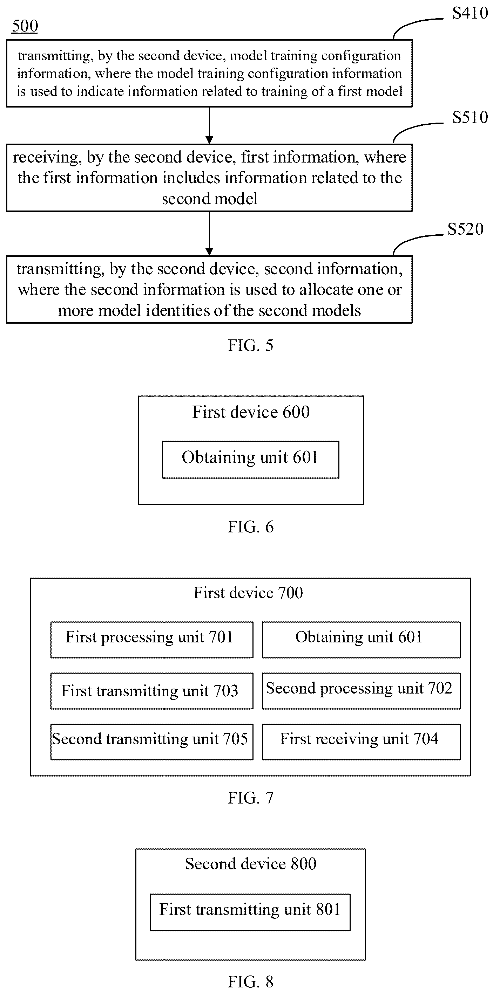

FIG. 5 is a schematic flowchart of an information configuration method according to another embodiment of the present application. The method 500 may include one or more limitations of the information configuration method of the above embodiments. In an implementation, as illustrated in FIG. 5, the method further includes:
S510: receiving, by the second device, first information, where the first information includes information related to a second model.

In an implementation, the second model is obtained by a first device based on model training configuration information, and the second model is an instance of the first model.

In an implementation, the first information includes one or more of:
a model training report associated with the second model;
an index number associated with the model training report;
an index number associated with the second model;
model description information associated with the second model;
an index number associated with the model description information; and
the second model.

In an implementation, the model training report is generated by the first device.

In an implementation, a model training report includes one or more of: model description information associated with a second model; a range of parameter types, in the range of input parameter types for the first model, that are not selected as model input parameters associated with the second model; a contribution ratio or contribution ratio level information corresponding to each parameter type included in the range of parameter types, in the range of input parameter types for the first model, that are not selected as the model input parameters associated with the second model; a contribution ratio or contribution ratio level information corresponding to each parameter type included in the range of input parameter types for the first model; a range of parameter types, in the range of output parameter types for the first model, that are not selected as model output parameters associated with the second model; a prediction accuracy or prediction accuracy level information corresponding to each parameter type included in the range of parameter types, in the range of output parameter types for the first model, that are not selected as the model output parameters associated with the second model; and a prediction accuracy or prediction accuracy information corresponding to each parameter type included in the range of output parameter types for the first model.

In an implementation, the model description information associated with the second model includes one or more of: a functional characteristic associated with the second model, a range of input parameter types associated with the second model, input parameter specification requirement information associated with the second model, an input parameter preprocessing rule associated with the second model, a range of output parameter types associated with the second model, output parameter specification requirement information associated with the second model, an output parameter preprocessing rule associated with the second model, application scenario information associated with the second model, deployment location information of the second model, capability requirement information for using the second model, performance monitoring indicator information of the second model, attribution information of the second model, effective usage scope information of the second model, generalization characteristic information of the second model, version information of the second model, precision level information of the second model, data compilation format information of the second model, data storage format information of the second model, computational complexity information of the second model, model complexity information of the second model, and model size information of the second model.

In an implementation, the model training report and the second model have an association relationship; or the model description information and the second model have an association relationship.

In an implementation, the first information is used to request model identifications of the one or more second models and/or to exchange information related to the second model.

In an implementation, as illustrated in FIG. 5, the method further includes:
S520: transmitting, by the second device, second information, where the second information is used to allocate model identifications of the one or more second models.

In an implementation, the second information includes one or more of:
model identification information allocated to the second model;
the index number associated with the model training report;
the index number associated with the second model; and
the index number associated with the model description information.

In an implementation, the second device stores one or more of: the model training report associated with the second model, the second model, the model identification of the second mode, and the model description information associated with the second model.

In an implementation, the method further includes: receiving, by the second device, capability information, where the capability information includes one or more of following capability information:
whether the first device supports a model training function;
a range of parameter types available for the first device; and
a maximum number of models trainable concurrently on the first device.

In an implementation, the model training configuration information is transmitted by the second device to a first device, and the model training configuration information is generated by the second device.

In an implementation, the model training configuration information is transmitted by the second device to the first device, the model training configuration information is received by the second device from a third device, and the model training configuration information is generated by the third device; the third device and the second device are different devices. The second device directly receives the model training configuration information from the third device, or the second device receives the model training configuration information from the third device through one or more relay devices.

In an implementation, the second device is a terminal device or a network device.

For specific examples of the information configuration methods 200 and 300 performed by the information configuration devices 400 and 500 in this embodiment, reference may be made to the relevant descriptions of information configuration devices in the above information configuration methods 200 and 300, which will not be repeated here for the sake of brevity.

FIG. 6 is a schematic block diagram of a first device 600 according to an embodiment of the present application. The first device 600 may include:
an obtaining unit 601 configured to obtain model training configuration information, where the model training configuration information is used to indicate information related to training of a first model.

In an implementation, the model training configuration information includes one or more of: a range of input parameter types for the first model, data source constraint information of input parameters for the first model, a range of output parameter types for the first model, an operation capability requirement for the first model, an output precision requirement for the first model, a complexity requirement for the first model, a size requirement for the first model, an algorithmic structure requirement for the first model, an input parameter contribution ratio or contribution ratio level threshold requirement for the first model, and an output parameter prediction accuracy or prediction accuracy level threshold requirement for the first model.

In an implementation, the range of input parameter types for the first model includes identification information and/or label information corresponding to at least one suggested model input parameter type.

In an implementation, the range of input parameter types for the first model includes first-type parameters and second-type parameters; the first-type parameters include identification information and/or label information corresponding to at least one determined model input parameter type, and the second-type parameters include identification information and/or label information corresponding to at least one suggested model input parameter type.

In an implementation, the data source constraint information of the input parameters for the first model includes one or more of: data-related source country information of the input parameters for the first model, data-related source geographic area information for the input parameters for the first model, data-related source operator information of the input parameters for the first model, data-related source logical area information of the input parameters for the first model, data-related source scenario information of the input parameters for the first model, and data-related source configuration information of the input parameters for the first model.

In an implementation, the range of output parameter types for the first model includes identification information and/or label information corresponding to at least one suggested model output parameter type.

In an implementation, the range of output parameter types for the first model includes third-type parameters and fourth-type parameters; the third-type parameters include identification information and/or label information corresponding to at least one determined model output parameter type, and the fourth-type parameters include identification information and/or label information corresponding to at least one suggested model output parameter type.

In an implementation, input parameter types included in the range of input parameter types for the first model and the input parameter contribution ratio or contribution ratio level threshold requirement for the first model have a one-to-one mapping relationship therebetween, and each input parameter type included in the range of input parameter types for the first model is associated with an input parameter contribution ratio or contribution ratio level threshold for the first model; or
the input parameter types included in the range of input parameter types for the first model and the input parameter contribution ratio or contribution ratio level threshold requirement for the first model have a many-to-one mapping relationship therebetween; and all input parameter types included in the range of input parameter types for the first model are associated with an input parameter contribution ratio or contribution ratio level threshold for the first model, or a set of input parameter types included in the range of input parameter types for the first model is associated with an input parameter contribution ratio or contribution ratio level threshold for the first model, and different sets of input parameter types are associated with different input parameter contribution ratios or contribution ratio level thresholds for the first model.

In an implementation, output parameter types included in the range of output parameter types for the first model and the output parameter prediction accuracy or prediction accuracy level threshold requirement for the first model have a one-to-one mapping relationship therebetween, and each output parameter type included in the range of output parameter types for the first model is associated with an output parameter prediction accuracy or prediction accuracy level threshold for the first model; or
the output parameter types included in the range of output parameter types for the first model and the output parameter prediction accuracy or prediction accuracy level threshold requirement for the first model have a many-to-one mapping relationship therebetween; all output parameter types included in the range of output parameter types for the first model are associated with an output parameter prediction accuracy or prediction accuracy level threshold for the first model, or a set of output parameter types included in the range of output parameter types for the first model is associated with an output parameter prediction accuracy or prediction accuracy level threshold for the first model, and different sets of output parameter types are associated with different effective model output parameter prediction accuracies or prediction accuracy level thresholds.

In an implementation, as illustrated in FIG. 7, the first device 700 further includes:
a first processing unit 701 configured to determine model training information based on the model training configuration information, and perform model training based on the model training information to obtain one or more second models, where the second model is an instance for the first model.

In an implementation, as illustrated in FIG. 7, the first device further includes:
a second processing unit 702 configured to generate a model training report.

In an implementation, the model training report includes one or more of: model description information associated with the second model; a range of parameter types, in the range of input parameter types for the first model, that are not selected as model input parameters associated with the second model; a contribution ratio or contribution ratio level information corresponding to each parameter type included in the range of parameter types, in the range of input parameter types for the first model, that are not selected as the model input parameters associated with the second model; a contribution ratio or contribution ratio level information corresponding to each parameter type included in the range of input parameter types for the first model; a range of parameter types, in the range of output parameter types for the first model, that are not selected as model output parameters associated with the second model; a prediction accuracy or prediction accuracy level information corresponding to each parameter type included in the range of parameter types, in the range of output parameter types for the first model, that are not selected as the model output parameters associated with the second model; and a prediction accuracy or prediction accuracy information corresponding to each parameter type included in the range of output parameter types for the first model.

In an implementation, the model description information associated with the second model includes one or more of: a functional characteristic associated with the second model, a range of input parameter types associated with the second model, input parameter specification requirement information associated with the second model, an input parameter preprocessing rule associated with the second model, a range of output parameter types associated with the second model, output parameter specification requirement information associated with the second model, an output parameter preprocessing rule associated with the second model, application scenario information associated with the second model, deployment location information of the second model, capability requirement information for using the second model, performance monitoring indicator information of the second model, attribution information of the second model, effective usage scope information of the second model, generalization characteristic information of the second model, version information of the second model, precision level information of the second model, data compilation format information of the second model, data storage format information of the second model, computational complexity information of the second model, model complexity information of the second model, and model size information of the second model.

In an implementation, the model training report and the second model have an association relationship; or the model description information and the second model have an association relationship.

In an implementation, as illustrated in FIG. 7, the first device further includes:
a first transmitting unit 703 configured to transmit first information, where the first information includes information related to the second model.

In an implementation, the first information includes one or more of:
the model training report;
an index number associated with the model training report;
an index number associated with the second model;
the model description information;
an index number associated with the model description information; and
the second model.

In an implementation, the first information is used to request model identifications of the one or more second models and/or to exchange information related to the second models.

In an implementation, as illustrated in FIG. 7, the first device further includes:
a first receiving unit 704 configured to receive second information, where the second information is used to allocate model identifications of the one or more second models.

In an implementation, the second information includes one or more of:
model identification information allocated to the second model;
the index number associated with the model training report;
the index number associated with the second model; and
the index number associated with the model description information.

In an implementation, the first device stores one or more of:
the model training report associated with the second model, the second model, the model identification of the second model, and the model description information associated with the second model.

In an implementation, as illustrated in FIG. 7, the first device further includes:
a second transmitting unit 705 configured to transmit capability information, where the capability information includes one or more of the following capability information:
whether the first device supports a model training function;
a range of parameter types available for the first device; and
a maximum number of models trainable concurrently on the first device.

In an implementation, the model training configuration information is generated by the first device.

In an implementation, the model training configuration information is received by the first device from a second device, and the model training configuration information is generated by the second device.

In an implementation, the model training configuration information is received by the first device from the second device, the model training configuration information is received by the second device from a third device, and the model training configuration information is generated by the third device; the third device and the second device are different devices. The second device directly receives the model training configuration information from the third device, or the second device receives the model training configuration information from the third device through one or more relay devices.

In an implementation, the first device is a terminal device or a network device.

The first devices 600 and 700 in the embodiments of the present application can implement the corresponding functions of the first device in the aforementioned method embodiments. For the processes, functions, implementations and beneficial effects corresponding to each module (sub-module, unit or component, etc.) in the first device 600, or 700, reference may be made to the corresponding description in the above method embodiments, and the details will not be repeated here. It is to be noted that the functions described in the various modules (sub-modules, units or components, etc.) in the first device 600, or 700 in the embodiments of the present application may be implemented by different modules (sub-modules, units or components, etc.) or by the same module (sub-module, unit or component, etc.).

FIG. 8 is a schematic block diagram of a second device 800 according to an embodiment of the present application. The second device 800 may include:
a first transmitting unit 801 configured to transmit model training configuration information, where the model training configuration information is used to indicate information related to training of a first model.

In an implementation, the model training configuration information includes one or more of:
a range of input parameter types for the first model, data source constraint information of input parameters for the first model, a range of output parameter types for the first model, an operation capability requirement for the first model, an output precision requirement for the first model, a complexity requirement for the first model, a size requirement for the first model, an algorithmic structure requirement for the first model, an input parameter contribution ratio or contribution ratio level threshold requirement for the first model, and an output parameter prediction accuracy or prediction accuracy level threshold requirement for the first model.

In an implementation, the range of input parameter types for the first model includes identification information and/or label information corresponding to at least one suggested model input parameter type.

In an implementation, the range of input parameter types for the first model includes first-type parameters and second-type parameters, the first-type parameters include identification information and/or label information corresponding to at least one determined model input parameter type, and the second-type parameters include identification information and/or label information corresponding to at least one suggested model input parameter type.

In an implementation, the data source constraint information of the input parameters for the first model includes one or more of:
data-related source country information of the input parameters for the first model, data-related source geographic area information of the input parameters for the first model, data-related source operator information of the input parameters for the first model, data-related source logic area information of the input parameters for the first model, data-related source scenario information of the input parameters for the first model, and data-related source configuration information of the input parameters for the first model.

In an implementation, the range of output parameter types for the first model includes identification information and/or label information corresponding to at least one suggested model output parameter type.

In an implementation, the range of output parameter types for the first model includes third-type parameters and fourth-type parameters, the third-type parameters include identification information and/or label information corresponding to at least one determined model output parameter type, and the fourth-type parameters include identification information and/or label information corresponding to at least one suggested model output parameter type.

In an implementation, input parameter types included in the range of input parameter types for the first model and the input parameter contribution ratio or contribution ratio level threshold requirement for the first model have a one-to-one mapping relationship therebetween, and each input parameter type included in the range of input parameter types for the first model is associated with an input parameter contribution ratio or contribution ratio level threshold for the first model; or
the input parameter types included in the range of input parameter types for the first model and the input parameter contribution ratio or contribution ratio level threshold requirement for the first model have a many-to-one mapping relationship therebetween; and all input parameter types included in the range of input parameter types for the first model are associated with an input parameter contribution ratio or contribution ratio level threshold for the first model, or a set of input parameter types included in the range of input parameter types for the first model is associated with an input parameter contribution ratio or contribution ratio level threshold for the first model, and different sets of input parameter types are associated with different input parameter contribution ratios or contribution ratio level thresholds for the first model.

In an implementation, output parameter types included in the range of output parameter types for the first model and the output parameter prediction accuracy or prediction accuracy level threshold requirement for the first model have a one-to-one mapping relationship therebetween, and each output parameter type included in the range of output parameter types for the first model is associated with an output parameter prediction accuracy or prediction accuracy level threshold for the first model; or
the output parameter types included in the range of output parameter types for the first model and the output parameter prediction accuracy or prediction accuracy level threshold requirement for the first model have a many-to-one mapping relationship therebetween; and all output parameter types included in the range of output parameter types for the first model are associated with an output parameter prediction accuracy or prediction accuracy level threshold for the first model, or a set of output parameter types included in the range of output parameter types for the first model is associated with an output parameter prediction accuracy or prediction accuracy level threshold for the first model, and different sets of output parameter types are associated with different effective model output parameter prediction accuracies or prediction accuracy level thresholds.

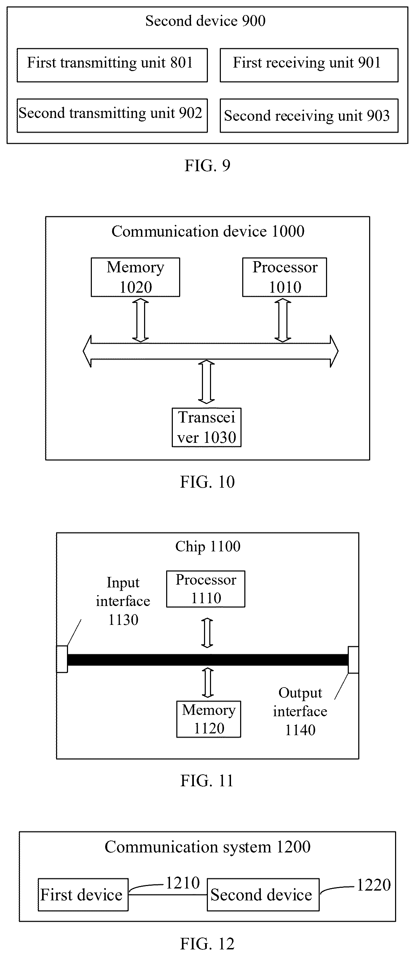

In an implementation, as illustrated in FIG. 9, the first device 900 further includes:
a first receiving unit 901 configured to receive first information, where the first information includes information related to the second model.

In an implementation, the second model is obtained by a first device based on the model training configuration information, and the second model is an instance of the first model.

In an implementation, the first information includes one or more of:
a model training report associated with the second model;
an index number associated with the model training report;
an index number associated with the second model;
model description information associated with the second model;
an index number associated with the model description information; and
the second model.

In an implementation, the model training report is generated by the first device.

In an implementation, the model training report includes one or more of: model description information associated with the second model; a range of parameter types, in the range of input parameter types for the first model, that are not selected as model input parameters associated with the second model; a contribution ratio or contribution ratio level information corresponding to each parameter type included in the range of parameter types, in the range of input parameter types for the first model, that are not selected as the model input parameters associated with the second model; a contribution ratio or contribution ratio level information corresponding to each parameter type included in the range of input parameter types for the first model; a range of parameter types, in the range of output parameter types for the first model, that are not selected as model output parameters associated with the second model; prediction accuracy or prediction accuracy level information corresponding to each parameter type included in the range of parameter types, in the range of output parameter types for the first model, that are not selected as the model output parameters associated with the second model; and prediction accuracy or prediction accuracy information corresponding to each parameter type included in the range of output parameter types for the first model.

In an implementation, the model description information associated with the second model includes one or more of: a functional characteristic associated with the second model, a range of input parameter types associated with the second model, input parameter specification requirement information associated with the second model, an input parameter preprocessing rule associated with the second model, a range of output parameter types associated with the second model, output parameter specification requirement information associated with the second model, an output parameter preprocessing rule associated with the second model, application scenario information associated with the second model, deployment location information of the second model, capability requirement information for using the second model, performance monitoring indicator information of the second model, attribution information of the second model, effective usage scope information of the second model, generalization characteristic information of the second model, version information of the second model, precision level information of the second model, data compilation format information of the second model, data storage format information of the second model, computational complexity information of the second model, model complexity information of the second model, and model size information of the second model.

In an implementation, the model training report and the second model have an association relationship; or the model description information and the second model have an association relationship.

In an implementation, the first information is used to request model identifications of one or more second models and/or to exchange information related to the second models.

In an implementation, as illustrated in FIG. 9, the second device 900 further includes:
a second transmitting unit 902 configured to transmit second information, where the second information is used to allocate model identifications of the one or more second models.

In an implementation, the second information includes one or more of:
model identification information allocated to the second model;
the index number associated with the model training report;
the index number associated with the second model; and
the index number associated with the model description information.

In an implementation, the second device stores one or more of: the model training report associated with the second model, the second model, the model identification of the second model, and the model description information associated with the second model.

In an implementation, as illustrated in FIG. 9, the second device 900 further includes:
a second receiving unit 903 configured to receive capability information, where the capability information includes one or more of the following capability information:
whether the first device supports a model training function;
a range of parameter types available for the first device; and
a maximum number of models trainable concurrently on the first device.

In an implementation, the model training configuration information is transmitted by the second device to a first device, and the model training configuration information is generated by the second device.

In an implementation, the model training configuration information is transmitted by the second device to the first device, the model training configuration information is received by the second device from a third device, and the model training configuration information is generated by the third device; the third device and the second device are different devices. The second device directly receives the model training configuration information from the third device, or the second device receives the model training configuration information from the third device through one or more relay devices.

In an implementation, the second device is a terminal device or a network device.

The second devices 800 and 900 in the embodiments of the present application can implement the corresponding functions of the second device in the aforementioned method embodiments. For the processes, functions, implementations and beneficial effects corresponding to various modules (sub-modules, units or components, etc.) in the second device 800, or 900, reference may made to the corresponding description in the above method embodiments, and details will not be repeated here. It is to be noted that the functions described in the various modules (sub-modules, units or components, etc.) in the second device 800, or 900 in the embodiments of the present application may be implemented by different modules (sub-modules, units or components, etc.) or by the same module (sub-module, unit or component, etc.).

FIG. 10 is a schematic structural diagram of a communication device 1000 according to the embodiments of the present application. The communication device 1000 includes a processor 1010, which may call and run a computer program from a memory to enable the communication device 1000 to implement the method in the embodiments of the present application.

In an implementation, the communication device 1000 may further include a memory 1020. The processor 1010 may call and run a computer program from the memory 1020 to enable the communication device 1000 to implement the method in the embodiments of the present application.

The memory 1020 may be a separate device independent of the processor 1010, or may be integrated into the processor 1010.

In an implementation, the communication device 1000 may further include a transceiver 1030, and the processor 1010 may control the transceiver 1030 to communicate with other devices; specifically, the transceiver may transmit information or data to other devices, or receive information or data transmitted by other devices.

The transceiver 1030 may include a transmitter and a receiver. The transceiver 1030 may further include antenna(s), and the number of the antenna(s) may be one or more.

In an implementation, the communication device 1000 may be the first device in the embodiments of the present application, and the communication device 1000 may implement the corresponding processes implemented by the network device in various methods in the embodiments of the present application, which will not be repeated here for the sake of brevity.

In an implementation, the communication device 1000 may be the second device in the embodiments of the present application, and the communication device 1000 may implement the corresponding processes implemented by the terminal device in various methods in the embodiments of the present application, which will not be repeated here for the sake of brevity.

FIG. 11 is a schematic structural diagram of a chip 1100 according to the embodiments of the present application. The chip 1100 includes a processor 1110, which may call and run a computer program from a memory to implement the method in the embodiments of the present application.

In an implementation, the chip 1100 may further include a memory 1120. The processor 1110 may call and run a computer program from the memory 1120 to implement the method performed by the terminal device or the network device in the embodiments of the present application.

The memory 1120 may be a separate device independent of the processor 1110, or may be integrated into the processor 1110.

In an implementation, the chip 1100 may further include an input interface 1130. The processor 1110 may control the input interface 1130 to communicate with other devices or chips; and specifically, the input interface may obtain information or data transmitted by other devices or chips.

In an implementation, the chip 1100 may further include an output interface 1140. The processor 1110 may control the output interface 1140 to communicate with other devices or chips; and specifically, the output interface may output information or data to other devices or chips.

In an implementation, the chip may be applied to the first device in the embodiments of the present application, and the chip may implement the corresponding processes implemented by the network device in various methods in the embodiments of the present application, which will not be repeated here for the sake of brevity.

In an implementation, the chip may be applied to the second device in the embodiments of the present application, and the chip may implement the corresponding processes implemented by the terminal device in various methods in the embodiments of the present application, which will not be repeated here for the sake of brevity.

The chips applied to the first device and the second device may be the same chip or different chips.

It should be understood that the chip mentioned in the embodiments of the present application may also be termed a system-level chip, a system chip, a chip system or a system-on-chip chip, etc.

The above processor may be a general-purpose processor, a digital signal processor (Digital Signal Processor, DSP), a field programmable gate array (Field Programmable Gate Array, FPGA), an application specific integrated circuit (Application Specific Integrated Circuit, ASIC) or other programmable logic devices, a transistor logic device, a discrete hardware component, and so on. The general-purpose processor may be a microprocessor, or the processor may also be any conventional processor, etc.

The memory above in the embodiments of the present application may be a volatile memory or a non-volatile memory, or may include both volatile and non-volatile memories. Herein, the non-volatile memory may be a read-only memory (ROM), a programmable ROM (PROM), an erasable PROM (EPROM), an electrically EPROM (EEPROM) or a flash memory. The volatile memory may be a random access memory (RAM).

It should be understood that the above memory is exemplary but not limiting illustration, e.g., the memory in embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM), etc. That is, the memory in the embodiments of the present application is intended to include, but not limited to, these and any other suitable types of memories.

FIG. 12 is a schematic block diagram of a communication system 1200 according to the embodiments of the present application. The communication system 1200 includes a first device 1210 and a second device 1220. The first device 1210 obtains model training configuration information, where the model training configuration information is used to indicate information related to training of a first model. The second device 1220 transmits the model training configuration information.

The first device 1210 may be configured to implement the corresponding function implemented by the first device in the above method, and the second device 1220 may be configured to implement the corresponding function implemented by the second device in the above method, which will not be repeated here, for the sake of brevity.

The above embodiments may be implemented in whole or in part through software, hardware, firmware, or any combination thereof. When the embodiments are implemented by using a software program, the software program may be implemented in a form of a computer program product in whole or in part. The computer program product includes one or more computer instructions. When computer program instructions are loaded on and executed by a computer, processes or functions according to the embodiments of the present application are generated in whole or in part. The computer may be a general-purpose computer, a dedicated computer, a computer network, or any other programmable device. The computer instructions may be stored in a computer-readable storage medium or transmitted from a computer-readable storage medium to another computer-readable storage medium. For example, the computer instructions may be transmitted from a website, computer, server or data center to another website, computer, server or data center via a wired manner (such as coaxial cable, optical fiber, or digital subscriber line (DSL)) or a wireless manner (such as infrared, wireless or microwave). The computer-readable storage medium may be any available medium able to be accessed by the computer, or may be a data storage device, such as a server or a data center, integrated by one or more available media. The available medium may be a magnetic medium (e.g., a floppy disk, a hard disk or a magnetic tape), an optical medium (e.g., a DVD), a semiconductor medium (e.g., a solid state drive (SSD)), or the like.

It should be understood that in the various embodiments of the present application, the magnitude of the serial number of each of the above-mentioned processes does not mean the order of execution. The order of execution of each process shall be determined by its function and internal logic, and shall not constitute any limitation on the implementation process of the embodiments of the present application.

It may be clearly understood by those skilled in the art that, for convenience and brevity of the description, the specific working procedures of the system, the apparatus and the unit described above may refer to the corresponding procedures in the above method embodiments, which will not be repeated here.

The above content is only specific implementations of the present application, but the protection scope of the present application is not limited thereto, and any skilled familiar with this technical field may easily think of changes or substitutions within the technical scope disclosed in the present application, which should be all covered within the protection scope of the present application. Therefore, the protection scope of the present application should be subject to the protection scope of the claims.

## Claims

1. An information configuration method, comprising:
obtaining, by a first device, model training configuration information, wherein the model training configuration information is used to indicate information related to training of a first model.

2. The method according to claim 1, wherein the model training configuration information includes one or more of:
a range of input parameter types for the first model, data source constraint information of input parameters for the first model, a range of output parameter types for the first model, an operation capability requirement for the first model, an output precision requirement for the first model, a complexity requirement for the first model, a size requirement for the first model, an algorithmic structure requirement for the first model, an input parameter contribution ratio or contribution ratio level threshold requirement for the first model, and an output parameter prediction accuracy or prediction accuracy level threshold requirement for the first model.

3. The method according to claim 2, wherein the range of input parameter types for the first model comprises identification information and/or label information corresponding to at least one suggested model input parameter type.

4. The method according to claim 2 or 3, wherein the range of input parameter types for the first model comprises first-type parameters and second-type parameters, the first-type parameters comprise identification information and/or label information corresponding to at least one determined model input parameter type, and the second-type parameters comprise identification information and/or label information corresponding to at least one suggested model input parameter type.

5. The method according to any one of claims 2 to 4, wherein the data source constraint information of the input parameters for the first model comprises one or more of:
data-related source country information of the input parameters for the first model, data-related source geographic area information of the input parameters for the first model, data-related source operator information of the input parameters for the first model, data-related source logic area information of the input parameters for the first model, data-related source scenario information of the input parameters for the first model, and data-related source configuration information of the input parameters for the first model.

6. The method according to any one of claims 2 to 5, wherein the range of output parameter types for the first model comprises identification information and/or label information corresponding to at least one suggested model output parameter type.

7. The method according to any one of claims 2 to 6, wherein the range of output parameter types for the first model comprises third-type parameters and fourth-type parameters, the third-type parameters comprise identification information and/or label information corresponding to at least one determined model output parameter type, and the fourth-type parameters comprise identification information and/or label information corresponding to at least one suggested model output parameter type.

8. The method according to any one of claims 2 to 7, wherein input parameter types comprised in the range of input parameter types for the first model and the input parameter contribution ratio or contribution ratio level threshold requirement for the first model have a one-to-one mapping relationship therebetween, and each input parameter type comprised in the range of input parameter types for the first model is associated with an input parameter contribution ratio or contribution ratio level threshold for the first model; or
the input parameter types comprised in the range of input parameter types for the first model and the input parameter contribution ratio or contribution ratio level threshold requirement for the first model have a many-to-one mapping relationship therebetween; and all input parameter types comprised in the range of input parameter types for the first model are associated with an input parameter contribution ratio or contribution ratio level threshold for the first model, or a set of input parameter types comprised in the range of input parameter types for the first model is associated with an input parameter contribution ratio or contribution ratio level threshold for the first model, and different sets of input parameter types are associated with different input parameter contribution ratios or contribution ratio level thresholds for the first model.

9. The method according to any one of claims 2 to 8, wherein output parameter types comprised in the range of output parameter types for the first model and the output parameter prediction accuracy or prediction accuracy level threshold requirement for the first model have a one-to-one mapping relationship therebetween, and each output parameter type comprised in the range of output parameter types for the first model is associated with an output parameter prediction accuracy or prediction accuracy level threshold for the first model; or
the output parameter types comprised in the range of output parameter types for the first model and the output parameter prediction accuracy or prediction accuracy level threshold requirement for the first model have a many-to-one mapping relationship therebetween; and all output parameter types comprised in the range of output parameter types for the first model are associated with an output parameter prediction accuracy or prediction accuracy level threshold for the first model, or a set of output parameter types comprised in the range of output parameter types for the first model is associated with an output parameter prediction accuracy or prediction accuracy level threshold for the first model, and different sets of output parameter types are associated with different effective model output parameter prediction accuracies or prediction accuracy level thresholds.

10. The method according to any one of claims 2 to 9, wherein the method further comprises:
determining, by the first device, model training information based on the model training configuration information; and
performing, by the first device, model training based on the model training information to obtain one or more second models, wherein the second model is an instance of the first model.

11. The method according to any one of claims 1 to 10, wherein the method further comprises:
generating, by the first device, a model training report.

12. The method according to claim 11, wherein a model training report comprises one or more of:
model description information associated with a second model; a range of parameter types, in a range of input parameter types for the first model, that are not selected as model input parameters associated with the second model; contribution ratio or contribution ratio level information corresponding to each parameter type comprised in the range of the parameter types, in the range of input parameter types for the first model, that are not selected as the model input parameters associated with the second model; contribution ratio or contribution ratio level information corresponding to each parameter type comprised in the range of input parameter types for the first model; a range of parameter types, in a range of output parameter types for the first model, that are not selected as model output parameters associated with the second model; prediction accuracy or prediction accuracy level information corresponding to each parameter type comprised in the range of the parameter types, in the range of output parameter types for the first model, that are not selected as the model output parameters associated with the second model; and prediction accuracy or prediction accuracy information corresponding to each parameter type comprised in the range of output parameter types for the first model.

13. The method according to claim 12, wherein the model description information associated with the second model comprises one or more of: a functional characteristic associated with the second model, a range of input parameter types associated with the second model, input parameter specification requirement information associated with the second model, an input parameter preprocessing rule associated with the second model, a range of output parameter types associated with the second model, output parameter specification requirement information associated with the second model, an output parameter preprocessing rule associated with the second model, application scenario information associated with the second model, deployment location information of the second model, capability requirement information for using the second model, performance monitoring indicator information of the second model, attribution information of the second model, effective usage scope information of the second model, generalization characteristic information of the second model, version information of the second model, precision level information of the second model, data compilation format information of the second model, data storage format information of the second model, computational complexity information of the second model, model complexity information of the second model, and model size information of the second model.

14. The method according to claim 12 or 13, wherein the model training report and the second model have an association relationship; or the model description information and the second model have an association relationship.

15. The method according to any one of claims 12 to 14, wherein the method further comprises:
transmitting, by the first device, first information, wherein the first information comprises information related to the second model.

16. The method according to claim 15, wherein the first information comprises one or more of:
the model training report;
index numbers associated with the model training report;
index numbers associated with the second model;
the model description information;
index numbers associated with the model description information; and
the second model.

17. The method according to claim 15 or 16, wherein the first information is used to request model identifications of the one or more second models and/or to exchange information related to the second models.

18. The method according to any one of claims 15 to 17, wherein the method further comprises:
receiving, by the first device, second information, wherein the second information is used to allocate model identifications of the one or more second models.

19. The method according to claim 18, wherein the second information comprises one or more of:
model identification information allocated to the second model;
index numbers associated with the model training report;
index numbers associated with the second model; and
index numbers associated with the model description information.

20. The method according to any one of claims 12 to 19, wherein the first device stores one or more of: model training reports associated with the second model, the second model, model identifications of the second model, and the model description information associated with the second model.

21. The method according to any one of claims 1 to 20, wherein the method further comprises:
transmitting, by the first device, capability information, wherein the capability information comprises one or more of following capability information:
whether the first device supports a model training function;
a range of parameter types available for the first device; and
a maximum number of models trainable concurrently on the first device.

22. The method according to any one of claims 1 to 21, wherein the model training configuration information is generated by the first device.

23. The method according to any one of claims 1 to 21, wherein the model training configuration information is received by the first device from a second device, and the model training configuration information is generated by the second device.

24. The method according to any one of claims 1 to 21, wherein the model training configuration information is received by the first device from a second device, the model training configuration information is received by the second device from a third device, and the model training configuration information is generated by the third device; wherein the third device and the second device are different devices, the second device directly receives the model training configuration information from the third device, or the second device receives the model training configuration information from the third device through one or more relay devices.

25. The method according to any one of claims 1 to 24, wherein the first device is a terminal device or a network device.

26. An information configuration method, comprising:
transmitting, by a second device, model training configuration information, wherein the model training configuration information is used to indicate information related to training of a first model.

27. The method according to claim 26, wherein the model training configuration information comprises one or more of: a range of input parameter types for the first model, data source constraint information of input parameters for the first model, a range of output parameter types for the first model, an operation capability requirement for the first model, an output precision requirement for the first model, a complexity requirement for the first model, a size requirement for the first model, an algorithmic structure requirement for the first model, an input parameter contribution ratio or contribution ratio level threshold requirement for the first model, and an output parameter prediction accuracy or prediction accuracy level threshold requirement for the first model.

28. The method according to claim 27, wherein the range of input parameter types for the first model comprises identification information and/or label information corresponding to at least one suggested model input parameter type.

29. The method according to claim 27 or 28, wherein the range of input parameter types for the first model comprises first-type parameters and second-type parameters, the first-type parameters comprise identification information and/or label information corresponding to at least one determined model input parameter type, and the second-type parameters comprise identification information and/or label information corresponding to at least one suggested model input parameter type.

30. The method according to any one of claims 27 to 29, wherein the data source constraint information of the input parameters for the first model comprises one or more of: data-related source country information of the input parameters for the first model, data-related source geographic area information of the input parameters for the first model, data-related source operator information of the input parameters for the first model, data-related source logic area information of the input parameters for the first model, data-related source scenario information of the input parameters for the first model, and data-related source configuration information of the input parameters for the first model.

31. The method according to any one of claims 27 to 30, wherein the range of output parameter types for the first model comprises identification information and/or label information corresponding to at least one suggested model output parameter type.

32. The method according to any one of claims 27 to 31, wherein the range of output parameter types for the first model comprises third-type parameters and fourth-type parameters, the third-type parameters comprise identification information and/or label information corresponding to at least one determined model output parameter type, and the fourth-type parameters comprise identification information and/or label information corresponding to at least one suggested model output parameter type.

33. The method according to any one of claims 27 to 32, wherein input parameter types comprised in the range of input parameter types for the first model and the input parameter contribution ratio or contribution ratio level threshold requirement for the first model have a one-to-one mapping relationship therebetween, and each input parameter type comprised in the range of input parameter types for the first model is associated with an input parameter contribution ratio or contribution ratio level threshold for the first model; or
the input parameter types comprised in the range of input parameter types for the first model and the input parameter contribution ratio or contribution ratio level threshold requirement for the first model have a many-to-one mapping relationship therebetween; and all input parameter types comprised in the range of input parameter types for the first model are associated with an input parameter contribution ratio or contribution ratio level threshold for the first model, or a set of input parameter types comprised in the range of input parameter types for the first model is associated with an input parameter contribution ratio or contribution ratio level threshold for the first model, and different sets of input parameter types are associated with different input parameter contribution ratios or contribution ratio level thresholds for the first model.

34. The method according to any one of claims 27 to 33, wherein output parameter types comprised in the range of output parameter types for the first model and the output parameter prediction accuracy or prediction accuracy level threshold requirement for the first model have a one-to-one mapping relationship therebetween, and each output parameter type comprised in the range of output parameter types for the first model is associated with an output parameter prediction accuracy or prediction accuracy level threshold for the first model; or
the output parameter types comprised in the range of output parameter types for the first model and the output parameter prediction accuracy or prediction accuracy level threshold requirement for the first model have a many-to-one mapping relationship therebetween; and all output parameter types comprised in the range of output parameter types for the first model are associated with an output parameter prediction accuracy or prediction accuracy level threshold for the first model, or a set of output parameter types comprised in the range of output parameter types for the first model is associated with an output parameter prediction accuracy or prediction accuracy level threshold for the first model, and different sets of output parameter types are associated with different effective model output parameter prediction accuracies or prediction accuracy level thresholds.

35. The method according to any one of claims 26 to 34, wherein the method further comprises:
receiving, by the second device, first information, wherein the first information comprises information related to second model.

36. The method according to claim 35, wherein the second model is obtained by a first device based on the model training configuration information, and the second model is an instance of the first model.

37. The method according to claim 35 or 36, wherein the first information comprises one or more of:
a model training report associated with the second model;
an index number associated with the model training report;
an index number associated with the second model;
model description information associated with the second model;
an index number associated with the model description information; and
the second model.

38. The method according to claim 37, wherein the model training report is generated by a first device.

39. The method according to claim 37 or 38, wherein the model training report comprises one or more of: the model description information associated with the second model; a range of parameter types, in the range of input parameter types for the first model, that are not selected as model input parameters associated with the second model; contribution ratio or contribution ratio level information corresponding to each parameter type comprised in the range of the parameter types, in the range of input parameter types for the first model, that are not selected as the model input parameters associated with the second model; contribution ratio or contribution ratio level information corresponding to each parameter type comprised in the range of input parameter types for the first model; a range of parameter types, in the range of output parameter types for the first model, that are not selected as model output parameters associated with the second model; prediction accuracy or prediction accuracy level information corresponding to each parameter type comprised in the range of parameter types, in the range of output parameter types for the first model, that are not selected as the model output parameters associated with the second model; and a prediction accuracy or prediction accuracy information corresponding to each parameter type comprised in the range of output parameter types for the first model.

40. The method according to claim 39, wherein the model description information associated with the second model comprises one or more of: a functional characteristic associated with the second model, a range of input parameter types associated with the second model, input parameter specification requirement information associated with the second model, an input parameter preprocessing rule associated with the second model, a range of output parameter types associated with the second model, output parameter specification requirement information associated with the second model, an output parameter preprocessing rule associated with the second model, application scenario information associated with the second model, deployment location information of the second model, capability requirement information for using the second model, performance monitoring indicator information of the second model, attribution information of the second model, effective usage scope information of the second model, generalization characteristic information of the second model, version information of the second model, precision level information of the second model, data compilation format information of the second model, data storage format information of the second model, computational complexity information of the second model, model complexity information of the second model, and model size information of the second model.

41. The method according to any one of claims 37 to 40, wherein the model training report and the second model have an association relationship; or the model description information and the second model have an association relationship.

42. The method according to any one of claims 35 to 40, wherein the first information is used to request model identifications of one or more second models and/or to exchange information related to the second models.

43. The method according to any one of claims 35 to 42, wherein the method further comprises:
transmitting, by the second device, second information, wherein the second information is used to allocate model identifications of the one or more second models.

44. The method according to claim 43, wherein the second information comprises one or more of:
model identification information allocated to the second model;
an index number associated with the model training report;
an index number associated with the second model; and
an index number associated with the model description information.

45. The method according to any one of claims 35 to 44, wherein the second device stores one or more of: a model training report associated with the second model, the second model, a model identification of the second model, and model description information associated with the second model.

46. The method according to any one of claims 26 to 45, wherein the method further comprises:
receiving, by the second device, capability information, wherein the capability information comprises one or more of following capability information:
whether a first device supports a model training function;
a range of parameter types available for the first device; and
a maximum number of models that are trained simultaneously on the first device.

47. The method according to any one of claims 26 to 46, wherein the model training configuration information is transmitted by the second device to a first device, and the model training configuration information is generated by the second device.

48. The method according to any one of claims 26 to 46, wherein the model training configuration information is transmitted by the second device to a first device, the model training configuration information is received by the second device from a third device, and the model training configuration information is generated by the third device; wherein the third device and the second device are different devices, the second device directly receives the model training configuration information from the third device, or the second device receives the model training configuration information from the third device through one or more relay devices.

49. The method according to any one of claims 26 to 48, wherein the second device is a terminal device or a network device.

50. A first device, comprising:
an obtaining unit configured to obtain model training configuration information, wherein the model training configuration information is used to indicate information related to training of a first model.

51. The first device according to claim 50, wherein the model training configuration information comprises one or more of: a range of input parameter types for the first model, data source constraint information of input parameters for the first model, a range of output parameter types for the first model, an operation capability requirement for the first model, an output precision requirement for the first model, a complexity requirement for the first model, a size requirement for the first model, an algorithmic structure requirement for the first model, an input parameter contribution ratio or contribution ratio level threshold requirement for the first model, and an output parameter prediction accuracy or prediction accuracy level threshold requirement for the first model.

52. The first device according to claim 51, wherein the range of input parameter types for the first model comprises identification information and/or label information corresponding to at least one suggested model input parameter type.

53. The first device according to claim 51 or 52, wherein the range of input parameter types for the first model comprises first-type parameters and second-type parameters, the first-type parameters comprise identification information and/or label information corresponding to at least one determined model input parameter type, and the second-type parameters comprise identification information and/or label information corresponding to at least one suggested model input parameter type.

54. The first device according to any one of claims 51 to 53, wherein the data source constraint information of the input parameters for the first model comprises one or more of: data-related source country information of the input parameters for the first model, data-related source geographic area information of the input parameters for the first model, data-related source operator information of the input parameters for the first model, data-related source logic area information of the input parameters for the first model, data-related source scenario information of the input parameters for the first model, and data-related source configuration information of the input parameters for the first model.

55. The first device according to any one of claims 51 to 54, wherein the range of output parameter types for the first model comprises identification information and/or label information corresponding to at least one suggested model output parameter type.

56. The first device according to any one of claims 51 to 55, wherein the range of output parameter types for the first model comprises third-type parameters and fourth-type parameters, the third-type parameters comprise identification information and/or label information corresponding to at least one determined model output parameter type, and the fourth-type parameters comprise identification information and/or label information corresponding to at least one suggested model output parameter type.

57. The first device according to any one of claims 51 to 56, wherein input parameter types comprised in the range of input parameter types for the first model and the input parameter contribution ratio or contribution ratio level threshold requirement for the first model have a one-to-one mapping relationship therebetween, and each input parameter type comprised in the range of input parameter types for the first model is associated with an input parameter contribution ratio or contribution ratio level threshold for the first model; or
the input parameter types comprised in the range of input parameter types for the first model and the input parameter contribution ratio or contribution ratio level threshold requirement for the first model have a many-to-one mapping relationship therebetween; and all input parameter types comprised in the range of input parameter types for the first model are associated with an input parameter contribution ratio or contribution ratio level threshold for the first model, or a set of input parameter types comprised in the range of input parameter types for the first model is associated with an input parameter contribution ratio or contribution ratio level threshold for the first model, and different sets of input parameter types are associated with different input parameter contribution ratios or contribution ratio level thresholds for the first model.

58. The first device according to any one of claims 51 to 57, wherein output parameter types comprised in the range of output parameter types for the first model and the output parameter prediction accuracy or prediction accuracy level threshold requirement for the first model have a one-to-one mapping relationship therebetween, and each output parameter type comprised in the range of output parameter types for the first model is associated with an output parameter prediction accuracy or prediction accuracy level threshold for the first model; or
the output parameter types comprised in the range of output parameter types for the first model and the output parameter prediction accuracy or prediction accuracy level threshold requirement for the first model have a many-to-one mapping relationship therebetween; and all output parameter types comprised in the range of output parameter types for the first model are associated with an output parameter prediction accuracy or prediction accuracy level threshold for the first model, or a set of output parameter types comprised in the range of output parameter types for the first model is associated with an output parameter prediction accuracy or prediction accuracy level threshold for the first model, and different sets of output parameter types are associated with different effective model output parameter prediction accuracies or prediction accuracy level thresholds.

59. The first device according to any one of claims 51 to 58, wherein the first device further comprises:
a first processing unit configured to determine model training information based on the model training configuration information; and perform model training based on the model training information to obtain one or more second models, wherein the second model is an instance of the first model.

60. The first device according to any one of claims 50 to 59, wherein the device further comprises:
a second processing unit configured to generate a model training report.

61. The first device according to claim 60, wherein the model training report comprises one or more of: model description information associated with the second model; a range of parameter types, in the range of input parameter types for the first model, that are not selected as model input parameters associated with the second model; a contribution ratio or contribution ratio level information corresponding to each parameter type comprised in the range of parameter types, in the range of input parameter types for the first model, that are not selected as the model input parameters associated with the second model; a contribution ratio or contribution ratio level information corresponding to each parameter type comprised in the range of input parameter types for the first model; a range of parameter types, in the range of output parameter types for the first model, that are not selected as model output parameters associated with the second model; a prediction accuracy or prediction accuracy level information corresponding to each parameter type comprised in the range of parameter types, in the range of output parameter types for the first model, that are not selected as the model output parameters associated with the second model; and a prediction accuracy or prediction accuracy information corresponding to each parameter type comprised in the range of output parameter types for the first model.

62. The first device according to claim 61, wherein the model description information associated with the second model comprises one or more of: a functional characteristic associated with the second model, a range of input parameter types associated with the second model, input parameter specification requirement information associated with the second model, an input parameter preprocessing rule associated with the second model, a range of output parameter types associated with the second model, output parameter specification requirement information associated with the second model, an output parameter preprocessing rule associated with the second model, application scenario information associated with the second model, deployment location information of the second model, capability requirement information for using the second model, performance monitoring indicator information of the second model, attribution information of the second model, effective usage scope information of the second model, generalization characteristic information of the second model, version information of the second model, precision level information of the second model, data compilation format information of the second model, data storage format information of the second model, computational complexity information of the second model, model complexity information of the second model, and model size information of the second model.

63. The first device according to claim 61 or 62, wherein the model training report and the second model have an association relationship; or the model description information and the second model have an association relationship.

64. The first device according to any one of claims 61 to 63, wherein the first device further comprises:
a first transmitting unit configured to transmit first information, wherein the first information comprises information related to the second model.

65. The first device according to claim 64, wherein the first information comprises one or more of:
the model training report;
an index number associated with the model training report;
an index number associated with the second model;
the model description information;
an index number associated with the model description information; and
the second model.

66. The first device according to claim 64 or 65, wherein the first information is used to request model identifications of the one or more second models and/or to exchange information related to the second models.

67. The first device according to any one of claims 64 to 66, wherein the first device further comprises:
a first receiving unit configured to receive second information, wherein the second information is used to allocate model identifications of the one or more second models.

68. The first device according to claim 67, wherein the second information comprises one or more of:
model identification information allocated to the second model;
an index number associated with the model training report;
an index number associated with the second model; and
an index number associated with the model description information.

69. The first device according to any one of claims 61 to 68, wherein the first device stores one or more of: a model training report associated with the second model, the second model, a model identification of the second model, and the model description information associated with the second model.

70. The first device according to any one of claims 50 to 69, wherein the first device further comprises:
a second transmitting unit configured to transmit capability information, wherein the capability information comprises one or more of following capability information:
whether the first device supports a model training function;
a range of parameter types available for the first device; and
a maximum number of models that are trained simultaneously on the first device.

71. The first device according to any one of claims 50 to 70, wherein the model training configuration information is generated by the first device.

72. The first device according to any one of claims 50 to 70, wherein the model training configuration information is received by the first device from a second device, and the model training configuration information is generated by the second device.

73. The first device according to any one of claims 50 to 70, wherein the model training configuration information is received by the first device from a second device, the model training configuration information is received by the second device from a third device, and the model training configuration information is generated by the third device; wherein the third device and the second device are different devices, the second device directly receives the model training configuration information from the third device, or the second device receives the model training configuration information from the third device through one or more relay devices.

74. The first device according to any one of claims 50 to 73, wherein the first device is a terminal device or a network device.

75. A second device, comprising:
a first transmitting unit configured to transmit model training configuration information, wherein the model training configuration information is used to indicate information related to training of a first model.

76. The second device according to claim 75, wherein the model training configuration information comprises one or more of: a range of input parameter types for the first model, data source constraint information of input parameters for the first model, a range of output parameter types for the first model, an operation capability requirement for the first model, an output precision requirement for the first model, a complexity requirement for the first model, a size requirement for the first model, an algorithmic structure requirement for the first model, an input parameter contribution ratio or contribution ratio level threshold requirement for the first model, and an output parameter prediction accuracy or prediction accuracy level threshold requirement for the first model.

77. The second device according to claim 76, wherein the range of input parameter types for the first model comprises identification information and/or label information corresponding to at least one suggested model input parameter type.

78. The second device according to claim 76 or 77, wherein the range of input parameter types for the first model comprises first-type parameters and second-type parameters, the first-type parameters comprise identification information and/or label information corresponding to at least one determined model input parameter type, and the second-type parameters comprise identification information and/or label information corresponding to at least one suggested model input parameter type.

79. The second device according to any one of claims 76 to 78, wherein the data source constraint information of the input parameters for the first model comprises one or more of: data-related source country information of the input parameters for the first model, data-related source geographic area information of the input parameters for the first model, data-related source operator information of the input parameters for the first model, data-related source logic area information of the input parameters for the first model, data-related source scenario information of the input parameters for the first model, and data-related source configuration information of the input parameters for the first model.

80. The second device according to any one of claims 76 to 79, wherein the range of output parameter types for the first model comprises identification information and/or label information corresponding to at least one suggested model output parameter type.

81. The second device according to any one of claims 76 to 80, wherein the range of output parameter types for the first model comprises third-type parameters and fourth-type parameters, the third-type parameters comprise identification information and/or label information corresponding to at least one determined model output parameter type, and the fourth-type parameters comprise identification information and/or label information corresponding to at least one suggested model output parameter type.

82. The second device according to any one of claims 76 to 81, wherein input parameter types comprised in the range of input parameter types for the first model and the input parameter contribution ratio or contribution ratio level threshold requirement for the first model have a one-to-one mapping relationship therebetween, and each input parameter type comprised in the range of input parameter types for the first model is associated with an input parameter contribution ratio or contribution ratio level threshold for the first model; or
the input parameter types comprised in the range of input parameter types for the first model and the input parameter contribution ratio or contribution ratio level threshold requirement for the first model have a many-to-one mapping relationship therebetween; and all input parameter types comprised in the range of input parameter types for the first model are associated with an input parameter contribution ratio or contribution ratio level threshold for the first model, or a set of input parameter types comprised in the range of input parameter types for the first model is associated with an input parameter contribution ratio or contribution ratio level threshold for the first model, and different sets of input parameter types are associated with different input parameter contribution ratios or contribution ratio level thresholds for the first model.

83. The second device according to any one of claims 76 to 82, wherein output parameter types comprised in the range of output parameter types for the first model and the output parameter prediction accuracy or prediction accuracy level threshold requirement for the first model have a one-to-one mapping relationship therebetween, and each output parameter type comprised in the range of output parameter types for the first model is associated with an output parameter prediction accuracy or prediction accuracy level threshold for the first model; or
the output parameter types comprised in the range of output parameter types for the first model and the output parameter prediction accuracy or prediction accuracy level threshold requirement for the first model have a many-to-one mapping relationship therebetween; and all output parameter types comprised in the range of output parameter types for the first model are associated with an output parameter prediction accuracy or prediction accuracy level threshold for the first model, or a set of output parameter types comprised in the range of output parameter types for the first model is associated with an output parameter prediction accuracy or prediction accuracy level threshold for the first model, and different sets of output parameter types are associated with different effective model output parameter prediction accuracies or prediction accuracy level thresholds.

84. The second device according to any one of claims 75 to 83, wherein the second device further comprises:
a first receiving unit configured to receive first information, wherein the first information comprises information related to a second model.

85. The second device according to claim 84, wherein the second model is obtained by a first device based on the model training configuration information, and the second model is an instance of the first model.

86. The second device according to claim 84 or 85, wherein the first information comprises one or more of:
a model training report associated with the second model;
an index number associated with the model training report;
an index number associated with the second model;
model description information associated with the second model;
an index number associated with the model description information; and
the second model.

87. The second device according to claim 86, wherein the model training report is generated by a first device.

88. The second device according to claim 86 or 87, wherein the model training report comprises one or more of: the model description information associated with the second model; a range of parameter types, in the range of input parameter types for the first model, that are not selected as model input parameters associated with the second model; a contribution ratio or contribution ratio level information corresponding to each parameter type comprised in the range of parameter types, in the range of input parameter types for the first model, that are not selected as the model input parameters associated with the second model; a contribution ratio or contribution ratio level information corresponding to each parameter type comprised in the range of input parameter types for the first model; a range of parameter types, in the range of output parameter types for the first model, that are not selected as model output parameters associated with the second model; a prediction accuracy or prediction accuracy level information corresponding to each parameter type comprised in the range of parameter types, in the range of output parameter types for the first model, that are not selected as the model output parameters associated with the second model; and a prediction accuracy or prediction accuracy information corresponding to each parameter type comprised in the range of output parameter types for the first model.

89. The second device according to claim 88, wherein the model description information associated with the second model comprises one or more of: a functional characteristic associated with the second model, a range of input parameter types associated with the second model, input parameter specification requirement information associated with the second model, an input parameter preprocessing rule associated with the second model, a range of output parameter types associated with the second model, output parameter specification requirement information associated with the second model, an output parameter preprocessing rule associated with the second model, application scenario information associated with the second model, deployment location information of the second model, capability requirement information for using the second model, performance monitoring indicator information of the second model, attribution information of the second model, effective usage scope information of the second model, generalization characteristic information of the second model, version information of the second model, precision level information of the second model, data compilation format information of the second model, data storage format information of the second model, computational complexity information of the second model, model complexity information of the second model, and model size information of the second model.

90. The second device according to any one of claims 86 to 89, wherein the model training report and the second model have an association relationship; or the model description information and the second model have an association relationship.

91. The second device according to any one of claims 84 to 89, wherein the first information is used to request model identifications of one or more second models and/or to exchange information related to the second models.

92. The second device according to any one of claims 84 to 91, wherein the second device further comprises:
a second transmitting unit configured to transmit second information, wherein the second information is used to allocate model identifications of one or more second models.

93. The second device according to claim 92, wherein the second information comprises one or more of:
model identification information allocated to a second model;
an index number associated with the model training report;
an index number associated with the second model; and
an index number associated with the model description information.

94. The second device according to any one of claims 84 to 93, wherein the second device stores one or more of: a model training report associated with the second model, the second model, a model identification of the second model, and model description information associated with the second model.

95. The second device according to any one of claims 75 to 94, wherein the second device further comprises:
a second receiving unit configured to receive capability information, wherein the capability information comprises one or more of following capability information:
whether a first device supports a model training function;
a range of parameter types available for the first device; and
a maximum number of models that are trained simultaneously on the first device.

96. The second device according to any one of claims 75 to 95, wherein the model training configuration information is transmitted by the second device to a first device, and the model training configuration information is generated by the second device.

97. The second device according to any one of claims 75 to 95, wherein the model training configuration information is transmitted by the second device to a first device, the model training configuration information is received by the second device from a third device, and the model training configuration information is generated by the third device; wherein the third device and the second device are different devices, the second device directly receives the model training configuration information from the third device, or the second device receives the model training configuration information from the third device through one or more relay devices.

98. The second device according to any one of claims 75 to 97, wherein the second device is a terminal device or a network device.

99. A communication device, comprising: a processor and a memory, wherein the memory is configured to store a computer program, and the processor is configured to call and run the computer program stored in the memory, to enable the communication device to perform the method according to any one of claims 1 to 25 or to perform the method according any one of claims 26 to 49.

100. A chip, comprising a processor configured to call and run a computer program from a memory, to enable a device equipped with the chip to perform the method according to any one of claims 1 to 25 or to perform the method according to any one of claims 26 to 49.

101. A computer-readable storage medium for storing a computer program which, when executed by a device, enables the device to perform the method according to any one of claims 1 to 25 or to perform the method according to any one of claims 26 to 49.

102. A computer program product comprising computer program instructions, wherein the computer program instructions enable a computer to perform the method according to any one of claims 1 to 25 or to perform the method according to any one of claims 26 to 49.

103. A computer program, enabling a computer to perform the method according to any one of claims 1 to 25 or to perform the method according to any one of claims 26 to 49.

104. A communication system comprising:
a first device configured to perform the method according to any one of claims 1 to 25; and
a second device configured to perform the method according to any one of claims 26 to 49.
